# DEMANDE DE BREVET EUROPEEN

(11) **EP 1 089 153 A1**
(43) Date de publication de la demande: **04.04.2001**
(21) Numéro de dépôt: 00402650.6
(22) Date de dépôt: 25.09.2000
(51) Int. Cl.: G05D 21/02

(54) **Procédé et dispositif pour réaliser un schéma d'une installation comportant des appareils alimentés avec du gaz**

(30) Priorité: 01.10.1999 FR 9912312
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gastiger, Michel, 75321 Paris cedex 07 (FR); Loiseau, Gérard, 75321 Paris cedex 07 (FR)
(74) Mandataire: Vesin, Jacques

(57) **Abrégé**

L'invention concerne un procédé pour établir un schéma d'une installation mettant en oeuvre des appareils, chaque appareil étant alimenté avec du gaz, comportant:
- la consultation d'une ou plusieurs base(s) de données (5) comportant, pour chaque appareil, des données sur le débit, la nature, la pureté du gaz alimentant l'appareil, et la pression d'alimentation de ce gaz pour cet appareil,
- la sélection, pour chaque appareil, d'une valeur, ou d'une valeur limite, de durée ou de fréquence d'utilisation ,
- le calcul, pour chaque appareil, de la consommation, ou de la consommation limite, en fonction de la valeur d'utilisation et des données sur le débit,
- le calcul, pour chaque gaz et chaque pureté de gaz, de la somme des consommations de tous les appareils,
- l'indication de contraintes techniques,
- la consultation d'une base de données (5) pour proposer, pour chaque gaz et chaque pureté de gaz, un conditionnement, en fonction des consommations et de contraintes techniques relatives au stockage des gaz et/ou à leur livraison.

## Description

L'invention concerne le domaine de l'organisation ou de la réorganisation (ou restructuration) de laboratoires ou d'usines ou d'équipements mettant en oeuvre des analyseurs ou des appareils alimentés avec du gaz, et/ou des services nécessitant une alimentation en gaz.

Plus précisément l'invention concerne un procédé et un système pour établir un schéma d'une installation, dans un tel laboratoire ou une telle usine, et pour établir un choix adapté d'une alimentation en gaz d'une telle installation.

De manière pratique, lorsqu'un employé d'une firme (par exemple un fabricant ou un distributeur de gaz) pouvant proposer de telles installations, avec leur alimentation, se rend dans un laboratoire ou une usine, il ne dispose, pour faire une offre à son client ou aux responsables du laboratoire ou de l'usine, que des besoins exprimés par le client, et des connaissances qu'il peut avoir sur le métier du client.

Si le client ne connaît pas parfaitement ses besoins, la firme ou son employé aura du mal à établir un projet adapté aux véritables besoins demandés par l'utilisation.

C'est notamment le cas lorsque la laboratoire concerné est un laboratoire de recherche ou un laboratoire de contrôle, qui ont des besoins exigeants et divers.

Il en résulte une perte de temps dans la mise au point technique du projet, et donc également dans sa réalisation finale.

Si le responsable de l'usine ou du laboratoire connaît bien ses besoins, le fabricant ou le fournisseur de matériel ou de gaz doit pouvoir optimiser son projet technique dès lors que son représentant se trouve sur le site de l'usine ou du laboratoire.

Ce fabricant ou ce fournisseur, peut alors disposer de données préalables sur le matériel et les alimentations en gaz existants ; mais, il est préférable de pouvoir établir le plus rapidement possible un projet technique tenant compte des modifications à apporter du fait des nouveaux besoins.

De plus, il est préférable de pouvoir intégrer ou incorporer les données nouvelles dans les données préexistantes, portant sur le matériel et les installations, le plus rapidement possible.

### Exposé de l'invention

L'invention a tout d'abord pour objet un procédé pour établir un schéma d'une installation mettant en oeuvre des appareils, chaque appareil étant alimenté avec du gaz, comportant :
- la consultation d'une ou plusieurs base(s) de données, ou la recherche, dans une ou plusieurs bases de données, de données comportant, pour chaque appareil de l'installation, des données sur le débit, la nature, la pureté du gaz alimentant l'appareil, et la pression d'alimentation de ce gaz pour cet appareil,
- la sélection, pour chaque appareil, d'une valeur ou d'une valeur limite, de durée ou de fréquence d'utilisation ,
- le calcul, pour chaque appareil, de la consommation, ou de la consommation limite, en fonction de la valeur d'utilisation, et des données sur le débit,
- le calcul, pour chaque gaz et chaque pureté de gaz, de la somme des consommations de tous les appareils,
- l'indication de contraintes techniques relatives au stockage des gaz et/ou à leur livraison,
- la consultation d'une base de données pour choisir, pour chaque gaz et chaque pureté de gaz, un conditionnement, en fonction des consommations et des contraintes techniques précédentes.

Avantageusement, ce procédé comporte en outre :
- une étape de consultation d'une ou plusieurs base(s) de données comportant des données sur des équipements d'installations de gaz,
- la recherche, dans cette base, de l'équipement permettant, pour chaque conditionnement et chaque appareil, de relier ledit conditionnement au dit appareil.

Ce procédé permet, par consultation de bases de données, la constitution d'un ensemble d'informations décrivant une installation avec ses appareils, l'alimentation en gaz de ces appareils, et les moyens matériels pour relier ladite alimentation aux appareils.

Ainsi, le schéma de l'installation peut être très rapidement établi, ce qui raccourcit sa durée de conception.

La consultation des bases de données peut être faite à distance, par moyens électroniques ou informatiques.

Le schéma d'installation peut donc être établi au lieu même où cette installation doit être réalisée.

De préférence, on effectue en outre une représentation graphique de l'installation comportant les appareils, et leurs moyens d'alimentation en gaz.

Cette représentation est avantageusement tridimensionnelle, ce qui permet de visualiser la disposition relative des différents tubes et canalisations d'amenée de gaz.

Selon un autre aspect de l'invention, une installation de gaz est définie, cette installation comportant au moins un type particulier de conditionnement d'un gaz, et un appareil ou un besoin alimenté par ce gaz, par utilisation de:
- bases de données fixes, qui comportent pour chaque appareil des données de base sur le débit, la nature, la pureté du gaz alimentant l'appareil, la pression d'alimentation de ce gaz pour cet appareil,
- une ou plusieurs base(s) dynamique(s), créée(s) par l'entrée de données et/ou le résultat de calculs.

Par conséquent, selon un autre aspect, l'invention a pour objet un procédé pour établir en ensemble de données pour la constitution d'une installation mettant en oeuvre des appareils, chaque appareil étant alimenté avec du gaz, comportant l'élaboration d'une base de données dynamique, contenant:
- pour chaque appareil, les données sur la nature et la pureté des gaz pour cet appareil, ainsi que le débit, la pression d'alimentation et la consommation de chaque gaz pour cet appareil, par consultation d'au moins une base de données fixe,
- la somme des consommations de tous les appareils, pour chaque gaz et chaque pureté de gaz,
- un conditionnement, pour chaque gaz et chaque pureté de gaz, en fonction des consommations des appareils, là encore par consultation d'au moins une base de données fixe.

La constitution du schéma d'installation, telle que déjà définie ci-dessus, ou l'établissement de l'ensemble de données tel qu'il vient d'être défini, détermine une installation en associant un conditionnement de gaz avec chaque appareil.

Cette détermination est de plus effectuée rapidement, comme déjà expliqué ci-dessus, ce qui raccourcit la durée de conception de l'installation.

Lorsque l'un des gaz est un mélange d'un gaz de fond et d'au moins un premier gaz mélangé, le procédé selon l'invention peut en outre comporter :
- la sélection de la composition quantitative souhaitée de gaz mélangé dans le mélange,
- la consultation d'une base de données comportant, pour chaque mélange, les tolérances de préparation et les précisions d'analyse correspondantes,
- l'indication ou l'affichage, pour la composition quantitative souhaitée, de la tolérance de préparation et de la précision d'analyse.

En outre, lorsque plusieurs compositions quantitatives sont sélectionnées pour un mélange, il est possible d'afficher une droite de régression, obtenue avec ces compositions quantitatives, pour un appareil donné.

L'invention concerne également un procédé pour réaliser une installation mettant en oeuvre des appareils, chaque appareil étant alimenté avec du gaz, comportant :
- l'établissement d'un schéma de l'installation, par un procédé tel que décrit ci-dessus,
- la réalisation matérielle de l'installation.

L'invention concerne également un dispositif pour établir, un schéma d'une installation mettant en oeuvre des appareils, chaque appareil étant alimenté avec des gaz, comportant :
- des moyens mémorisant :
   - au moins une base de données comportant, pour chaque appareil, des données sur le débit, la nature, la pureté du gaz alimentant l'appareil, et la pression d'alimentation de ce gaz pour cet appareil,
   - une base de données comportant, pour chaque gaz et chaque pureté de gaz, au moins un conditionnement possible,
- des moyens pour sélectionner, pour chaque appareil, une valeur ou une valeur limite, de durée ou de fréquence d'utilisation ,
- des moyens pour calculer, pour chaque appareil, la consommation, ou la consommation limite, en fonction des données sur le débit et de la valeur d'utilisation,
- des moyens pour calculer, pour chaque gaz, et chaque pureté de gaz, la somme des consommations de tous les appareils,
- des moyens pour indiquer des contraintes techniques relatives au stockage des gaz et/ou à leur livraison,
- des moyens pour consulter la base de données sur les conditionnements, pour y trouver, en fonction de données de consommation en gaz et de contraintes techniques relatives au stockage des gaz et/ou à leur livraison, un conditionnement possible.

L'invention a également pour objet un dispositif terminal pour établir un schéma d'une installation de gaz, pour un laboratoire ou une usine comportant au moins un appareil, chaque appareil étant alimenté avec des gaz, ce dispositif comportant :
- des moyens de communication pour établir une communication entre ledit dispositif terminal et des moyens contenant au moins une base de données comportant, pour chaque appareil, des données sur le débit, la nature, la pureté du gaz alimentant l'appareil, et la pression d'alimentation de ce gaz pour cet appareil, et pour transférer des données depuis ledit ensemble de bases de données vers ledit terminal,
- des moyens pour fournir audit terminal des données d'utilisateur dudit terminal, comportant au moins une donnée sur un appareil utilisé ou identifiant un appareil utilisé,
- des moyens de mémorisation, en communication avec les moyens pour fournir audit terminal des données d'utilisateur, pour mémoriser ces données d'utilisateur sur un appareil utilisé par l'utilisateur, ainsi que des données fournies par la base de données sur le débit, la nature, la pureté du gaz alimentant cet appareil, et la pression d'alimentation de ce gaz pour cet appareil,
- des moyens pour calculer, ou spécialement programmés pour calculer, pour chaque appareil, la consommation, ou la consommation limite, en fonction du débit de gaz, et pour calculer, pour chaque gaz, et chaque pureté de gaz, la somme des consommations de tous les appareils utilisés,
- des moyens d'affichage, en communication avec les moyens de mémorisation, pour afficher au moins une partie de ces données fournies par la base de données, et/ou la ou les somme(s) de consommation calculée(s) pour chaque gaz.

Dans les deux cas un tel dispositif constitue un outil très efficace dans l'élaboration d'une proposition technique et/ou commerciale, lors de la réalisation d'une organisation, ou d'une réorganisation, d'un laboratoire ou d'un équipement mettant en oeuvre des analyseurs ou des appareils alimentés avec du gaz.

Une telle proposition peut être réalisée beaucoup plus rapidement qu'avec les méthodes traditionnelles.

En outre, des moyens peuvent être prévus pour représenter graphiquement l'installation comportant lesdits appareils et leurs moyens d'alimentation en gaz.

Les moyens de mémorisation de bases de données étant localisées dans un ordinateur central.

### Brève description des figures

Les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels:
- la figure 1 représente une vue schématique d'un système pour mettre en oeuvre l'invention,
- la figure 2 représente schématiquement la structure interne de moyens informatiques mis en oeuvre dans le cadre de la présente invention,
- la figure 3 est une représentation tridimensionnelle d'une installation obtenue à l'aide d'un procédé selon l'invention,
- la figure 4 est une représentation plus détaillée d'une partie d'une installation obtenue à l'aide d'un procédé selon l'invention,
- la figure 5 est un autre type de représentation détaillée d'une installation obtenue à l'aide d'un procédé selon l'invention,
- les figures 6, 7A et 7B représentent chacune une droite de régression théorique et une, ou deux, droite(s) de régression obtenue(s) à partir de mesures avec un appareil,
- la figure 8 est un organigramme d'un procédé selon l'invention
- la figure 9 est un organigramme d'un procédé selon l'invention, mis en oeuvre dans le cas de mélanges gazeux,
- les figures 10A à 10R sont des exemples de pages-écran pouvant apparaître lors de la mise en oeuvre d'un procédé selon l'invention,

### Description détaillée de modes de réalisation de l'invention

Dans toute la description qui suit on désignera par l'expression "client" la personne qui gère ou qui est responsable du laboratoire ou de l'usine où sont installés les appareils, ou bien où sont localisés les services alimentés en gaz. Il est établi une liste de l'ensemble des appareils dont il dispose ou des services qu'il doit mettre en oeuvre, et qui sont alimentés avec du gaz.

On désignera par ailleurs par utilisateur, soit le client lui-même, soit un représentant d'une société qui fabrique ou distribue des gaz et/ou l'équipement correspondant.

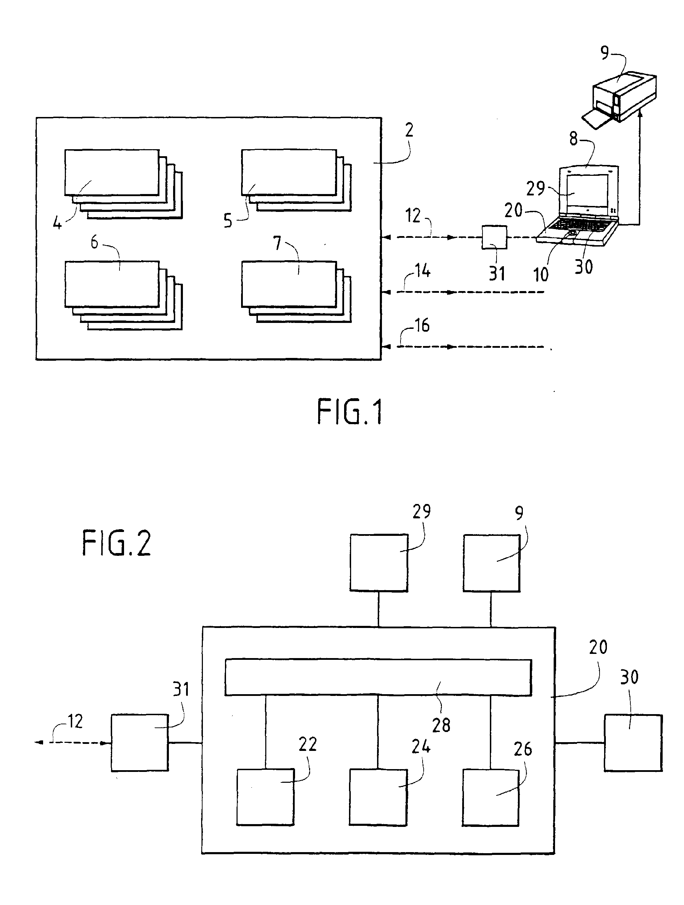

Un exemple de réalisation d'un système permettant la mise en oeuvre de l'invention va être décrit en liaison avec la figure 1.

Sur cette figure, la référence 2 désigne soit un ordinateur central, soit un site web. Dans le deuxième cas, ce site n'est de préférence accessible que par un réseau intranet.

Dans les deux cas, des bases de données 4, 5, 6, 7 sont hébergées dans l'ordinateur ou sur le site. De telles bases de données peuvent être mises à jour et concernent par exemple, respectivement:
- une base de données 4 dans laquelle sont recensés les clients d'une entreprise qui fabrique ou qui distribue du gaz,
- une base de données 5 regroupant les caractéristiques physiques de gaz, et éventuellement des données techniques du gaz, propres au fabricant ou au fournisseur ou au distributeur de gaz,
- une base de données 6 concernant divers analyseurs ou appareils utilisés et nécessitant chacun une alimentation en gaz
- et une base de donnée 7 concernant du matériel, ou équipement, par exemples des détendeurs et/ou des robinets, ..., pouvant être utilisés en combinaison avec les analyseurs de la base 6 et les gaz de la base 5.

Divers utilisateurs peuvent être connectés aux moyens 2 d'hébergement de ces bases de données. Sur la figure 1, un de ces utilisateurs est représenté par son ordinateur portable ou de type PC 8, la connexion avec les moyens 2 étant assurée par un réseau de communication 12, par exemple un réseau intranet 12 et par des moyens de connexion à ce réseau (modem ou carte réseau 31).

En parallèle, d'autres utilisateurs, non représentés sur la figure, peuvent être connectés aux moyens d'hébergement 2, par des moyens de communications 14, 16, ... , qui peuvent faire partie d'un réseau: L'ordinateur de chaque utilisateur y est également connecté par un modem ou une carte réseau.

Selon une variante, les bases de données, 4, 5, 6, 7 peuvent aussi être mémorisées dans les moyens de mémorisation du dispositif informatique 8, dans la mesure où la taille de ces bases de données et la taille mémoire disponible dans ce système informatique 8 sont compatibles.

Le système informatique 8 peut être par exemple un micro-ordinateur de type PC du commerce.

Il comporte (figure 2) une unité centrale 20, qui comprend elle-même un microprocesseur 22, un ensemble 24 de mémoires ROM et RAM, un disque dur 26, qui a aussi une fonction de stockage d'informations, tous ces éléments étant couplés à un bus 28.

Un écran 29 permet de visualiser des informations sur les données rentrées dans le système par un opérateur, et les données fournies par les bases de données en réponse aux données entrées par l'opérateur. Des exemples de pages de présentation, affichées au cours de l'exécution du procédé selon l'invention, seront donnés ci-dessous.

Le système dispose également de périphériques de contrôle, et notamment d'un clavier 30 et d'une souris 10. D'autres moyens de sélectionner une zone ou un champ d'une page affichée à l'écran 29 peuvent être également utilisés, par exemple tout moyen permettant de réaliser une sélection par contact tactile sur l'écran.

Les instructions pour mettre en oeuvre un procédé selon l'invention sont mémorisées dans les moyens 24, 26 de mémorisation du système informatique 8. Les programmes correspondants peuvent aussi être résidents sur un site web 2 auquel un utilisateur se connecte via le terminal 8, les moyens 31 et le réseau 12.

Selon un autre mode de réalisation, toute ou partie de l'information contenue dans les bases de données 4, 5, 6, 7 est contenue dans la mémoire RAM du système informatique 8 et / ou dans le disque dur 26.

La base de données 4, ou base de données client, concerne essentiellement des informations générales sur les acheteurs de gaz déjà recensés par le fabricant ou le fournisseur de gaz.

La base 4 peut également contenir des informations sur le site ou l'usine, ou les installations, d'un client particulier, ainsi que les prix pratiqués antérieurement chez ce client.

La base de données 5 contient essentiellement, pour chaque gaz fabriqué ou fourni par le fabricant ou le fournisseur de gaz, la nature de ce gaz, son grade ou sa pureté, le (ou les) conditionnement(s) suivant lequel, ou lesquels, il est disponible, et, éventuellement, les informations concernant le code de chaque article, tel que défini par les données précédentes, et/ou son prix, et/ou des propriétés physiques ou thermodynamiques.

Dans cette base de données sur les gaz, on peut également trouver des informations sur les mélanges de gaz que le fabricant ou le fournisseur est susceptible d'offrir.

Chaque mélange de gaz est défini par sa composition, qui fait intervenir un gaz de fond et un ou plusieurs gaz superposés ou mélangés à ce gaz de fond . La base peut alors par exemple offrir, pour chaque gaz de fond, la liste des gaz disponibles, qui sont mélangés à ce gaz de fond et, pour chacun de ces gaz, la liste des concentrations disponibles.

Elle peut également contenir des informations sur les tolérances de réalisation des mélanges et les incertitudes d'analyse sur ces mélanges.

La base de données 6 concerne les analyseurs ou les appareils pouvant être rencontrés dans une installation ou dans une usine. En d'autres termes, elle contient la liste des appareils qui ont besoin de gaz pour leur fonctionnement, et/ou leur étalonnage et/ou leur calibration. En relation avec chaque analyseur, sont indiquées les valeurs de débit en gaz, le (ou les) type(s) de gaz (nature et pureté), et de pression d'alimentation requis par l'analyseur ou l'appareil.

Des exemples d'analyseurs pouvant être rencontrés dans une installation ou une usine ou un laboratoire peuvent être les suivants: analyseurs thermiques, analyseurs à fluorescence X, spectromètres de masse, spectromètres d'émission à plasma, spectromètres d'absorption infrarouge, chromatographes en phase liquide. Cette liste n'est nullement limitative, et tout autre type d'analyseur peut être rencontré dans un laboratoire ou une usine donnée et être référencé dans la base de données 6.

Des services peuvent également être référencés dans cette base de données. Il s'agit par exemple de production de froid ou de production d'une certaine atmosphère.

Cette base peut être enrichie par des informations sur de nouveaux analyseurs, appareils ou services.

La base de données 7 sur le matériel contient les désignations et les références des matériels proposés par l'installateur ou le fournisseur de gaz. Elle peut également contenir des informations telles que le prix des différents matériels.

En réponse aux instructions de l'utilisateur, une connexion est établie entre le système 8 et les moyens 2 qui hébergent les bases de données et, éventuellement, les programmes à mettre en oeuvre pour exécuter le procédé.

Une session interactive peut alors être initialisée, au cours de laquelle, en réponse à des données introduites par l'utilisateur, le système 2 va envoyer à cet utilisateur des données sélectionnées par recherche dans les bases de données 4, 5, 6, 7.

A l'aide du système informatique 8, un premier analyseur ou appareil est sélectionné. Les informations spécifiques à cet analyseur, et relatives à la nature, à la pureté, et au débit de gaz nécessaire, ainsi qu'à la pression d'alimentation de l'analyseur ou de l'appareil, sont recherchées dans la base 6 et envoyées au système informatique 8, mémorisées dans les moyens de mémorisation 24, 26. Ces informations peuvent être affichées sur l'écran 28. Elles peuvent être aussi validées et corrigées.

En outre, le temps de fonctionnement de l'appareil est introduit suivant les données fournies par le client, et il est possible d'en déduire la consommation en gaz de l'appareil, pour chaque gaz.

Cette étape est répétée autant de fois que nécessaire, c'est-à-dire autant de fois qu'il y a d'appareils recensés par le client.

Toutes les données ainsi rassemblées sont conservées dans les mémoires 24, 26 du système informatique 8. Elles peuvent aussi être envoyées à l'ordinateur central 2.

Si des besoins en gaz existent, autres que des besoins en alimentation d'analyseurs, par exemple pour générer certaines atmosphères, ou pour obtenir certaines températures basses, les mêmes données sont introduites dans le système 8, par exemple à la main à l'aide du clavier 30 et sans recours à une base de données particulière. Ces données sont elles aussi mémorisées, dans les mémoires 24, 26 du système 8, ou envoyées vers le système 2.

Un tableau récapitulatif des besoins exprimés peut être affiché sur l'écran 28. Il est alors possible de corriger les données introduites, et/ou de les regrouper zone par zone, ou laboratoire par laboratoire.

Le système 8 (ou les moyens 2) incorporent un logiciel de calcul qui va permettre, pour chaque point d'utilisation, et donc pour chaque besoin ou chaque appareil, de calculer la, ou les, consommations unitaires en gaz.

La somme des consommations, faite gaz par gaz et pureté par pureté, est gardée en mémoire 24, 26. En outre, les données correspondant à la pression d'alimentation la plus élevée (sur l'ensemble de tous les appareils), et au débit de l'alimentation la plus importante, peuvent également être conservées en mémoire.

De manière plus précise, par besoin ou par appareil, gaz et grade, le volume demandé (temps de travail × débit) est calculé. Le temps de travail est peut-être par exemple mensuel ou trimestriel ou annuel. Ces résultats sont mémorisés.

L'ensemble de ces résultats, pour chaque gaz, et pour chaque grade ou pureté, est sommé et mémorisé, et ceci pour chaque laboratoire ou ensemble de laboratoires.

Par exemple, on obtient le résultat suivant:
azote / pureté = 1 / 30m³ par mois / pₘₐₓ = 5 bars / débitₘₐₓ = 1 litre par heure / analyseurs : X, Y et Z / laboratoire 1.

Pour chaque gaz, la consommation totale est ensuite comparée à l'offre du fabricant ou du fournisseur de gaz (par consultation et recherche dans la base 5), afin de répondre aux besoins correspondants, le critère retenu étant le conditionnement du gaz (bouteille, ou cadre, ou vrac).

Pour réaliser ce choix, il est en outre possible de prendre en compte, d'une part, les contraintes du fabricant ou du fournisseur (accessibilité du site où la livraison doit être effectuée, et/ou délai entre deux livraisons successives, ...) et/ou les contraintes éventuelles du client ou du laboratoire auquel la livraison doit être réalisée (place disponible pour installer les conteneurs de gaz et/ou stockage des conteneurs à l'intérieur ou à l'extérieur; et/ou présence de personnel pouvant manipuler les conteneurs). L'ensemble de ces contraintes peut amener à modifier un choix initial de conditionnement. Un choix final est mémorisé, et peut être par exemple également intégré à la base client 4.

Ainsi qu'il sera expliqué plus loin, les contraintes portant sur les mélanges ne sont pas nécessairement du même type que celles portant sur les gaz purs.

Une fois le choix du conditionnement réalisé, il est possible de proposer un schéma d'installation type, adapté à chaque gaz, à chaque pureté, et pour le débit maximum, et la pression maximum de travail requis par l'ensemble des analyseurs, et pour une qualité d'analyse donnée. Ainsi, pour chaque conditionnement, il est possible de proposer un équipement ou un ensemble de matériels (vannes, et/ou régulateurs, et/ou filtres ...) nécessaires au fonctionnement de l'analyseur ou de l'appareil, avec les conditionnements choisis et retenus précédemment. A cette fin, la base de données 7 sur les matériels disponibles peut être consultée.

Le choix de l'équipement peut être réalisé en deux étapes.

Une première étape concerne l'équipement pour la partie haute pression, associée au conditionnement. Un schéma peut être par exemple affiché ou visualisé, qui montre les détails du stockage et les matériels nécessaires au fonctionnement de celui-ci (détendeurs, et/ou vannes,...). Le client choisit ensuite tout ou partie du matériel nécessaire. Le matériel offert est choisi en relation avec les données sur le gaz (type, pureté, débit,...).

Une deuxième étape concerne l'équipement pour la partie basse pression, associée au point d'utilisation. Un schéma peut être par exemple affiché ou visualisé, qui montre les détails des raccordements à effectuer entre la sortie du stockage de gaz et l'utilisation. Le client choisit ensuite tout ou partie du matériel nécessaire. Le matériel offert est choisi en relation avec les données sur le gaz (type, pureté, débit,...).

Des informations concernant des paramètres géométriques du lieu où l'installation doit être réalisée peuvent aussi être saisies. Ces données géométriques conditionnent les longueurs de lignes ou des canalisations de gaz à installer entre chaque source de gaz et chaque point d'utilisation.

L'ensemble de ces résultats, obtenus pour un laboratoire ou une usine, peut être étendu à un bâtiment ou à un site complet, par simple juxtaposition des solutions trouvées pour chaque bâtiment ou site individuel.

Il est possible de produire un schéma d'une installation de gaz telle qu'elle s'intégrera dans le laboratoire ou l'usine, par exemple par une représentation des salles et/ou des bâtiments en trois dimensions.

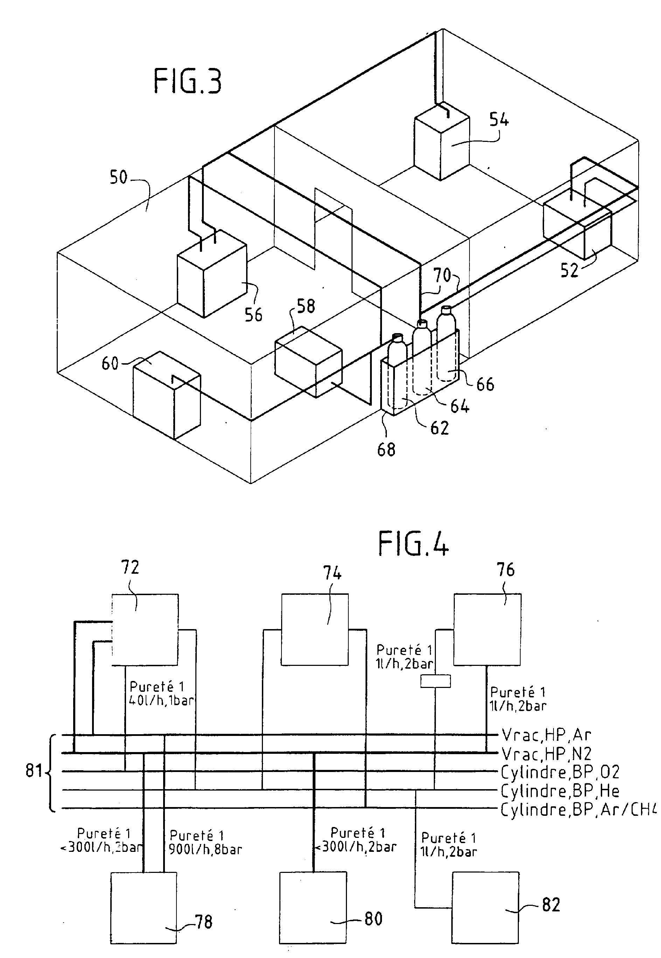

Une telle représentation est donnée en figure 3. Sur cette figure un bâtiment 50 d'un laboratoire ou d'une usine comporte divers appareils 52, 54, 56, 58, 60, qui sont alimentés par diverses bouteilles de gaz 62, 64, 66 disposées dans un cadre 68. Un ensemble de canalisations 70 relie les différentes bouteilles aux différents analyseurs, suivant les besoins de ce dernier. Par exemple, sur la figure 3, la bouteille 62 alimente les analyseurs 56, 58 et 60, la bouteille 64 alimente les analyseurs 52, 54, 56 et la bouteille 66 alimente l'analyseur 52.

Dans ce premier type de représentation, les analyseurs et les appareils du laboratoire sont représentés, par exemple par des cubes, tels qu'ils se présentent réellement dans le laboratoire, avec les connexions aux diverses sources de gaz.

De même, les sources de gaz sont représentées à l'endroit où elles doivent être placées réellement. L'ensemble des canalisations constitue donc un ensemble tel qu'il peut être réellement installé.

La même représentation peut être réalisée pour une installation incorporant d'autres applications (boîte à gants, pièce sous atmosphère contrôlée, ...) auxquels des canalisations amènent des gaz à partir d'une ou plusieurs sources.

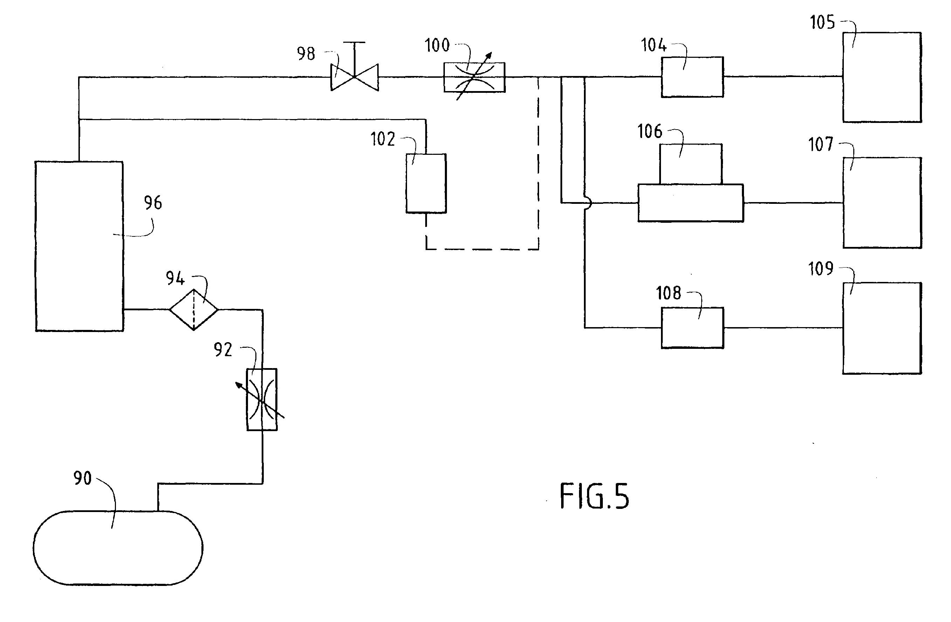

Une autre possibilité de représentation, plus détaillée, est illustrée sur la figure 4. Les divers appareils 72, 74, 76, 78, 80, 82 d'un même laboratoire sont représentés schématiquement avec leurs connexions aux différentes alimentations en gaz et aux différentes canalisations 81 qui sont, dans ce type de représentation, disposées linéairement et parallèlement entre elles. Chacune de ces canalisations est reliée à une ou plusieurs source(s) de gaz particulière(s), indiquée(s) sur la figure. Pour chaque gaz, sont précisés le mode de conditionnement (cylindre = bouteille), la pression (haute = H, basse = B) et la nature du gaz. Par ailleurs, pour un ou plusieurs des analyseurs représentés, il est possible d'indiquer, par exemple, la pureté, et/ou le débit, et/ou la pression nécessaire.

Dans le procédé décrit ci-dessus, il est également possible de traiter l'aspect concernant le matériel à mettre en oeuvre pour relier les gaz retenus, avec leur conditionnement, aux différents analyseurs.

Un type de représentation qu'il est alors possible de produire est celle donnée sur la figure 5.

Sur cette figure, la référence 90 désigne un compresseur d'air (la source de gaz), relié à un régulateur basse pression 92, disposé en amont d'un filtre 94. L'air qui traverse ce dernier entre ensuite dans un générateur d'azote 96, qui est lui-même relié à une vanne 98, située en amont d'un régulateur basse pression 100. La sortie du générateur 96 peut être optionellement reliée à un ensemble vanne-régulateur de pression 102. Les références 104 et 108 désignent chacune une vanne de réglage, et la référence 106 un débitmètre massique. Ces derniers éléments sont reliés chacun à un analyseur ou à un appareil 105, 107, 109.

Afin d'effectuer les représentations décrites ci-dessus, un programme, fonctionnant comme un logiciel de CAO, peut être chargé ou mémorisé dans le système 8. Après avoir pris et entré les données correspondantes sur les dimensions du laboratoires ou de l'usine, et avoir dessiné ce laboratoire ou cette usine à l'écran, les différents éléments peuvent être recherchés dans une mémoire qui contient une bibliothèque, et assemblés pour créer un réseau de distribution de gaz. Pour une représentation du type de celle de la figure 3, ce logiciel peut aussi calculer, pour chaque appareil et chaque source, le trajet de canalisation optimum, par exemple celui pour lequel la longueur de canalisation est minimum.

Les informations pour faire exécuter un tel programme de CAO sont stockées en mémoire 24, 26 du système 8.

Les différentes formes d'approvisionnement (nombre de bouteilles, nombre de générateurs, ...) ainsi que les différents matériels choisis peuvent être édités sous la forme d'une offre, avec un prix pour chaque produit. Cette offre peut être imprimée sur un support papier, à l'aide d'une imprimante 9 reliée au système 8. Les prix retenus peuvent être ceux contenus dans la base de données 5 sur les gaz, ou des prix pratiqués en particulier pour le client consulté et stockés dans la base de données clients 4.

Da manière plus précise, pour effectuer une représentation de l'installation dans le, ou les, laboratoire(s), on peut procéder selon les étapes suivantes.

Tout d'abord, on dessine le plan, à l'échelle, de la pièce, ou des pièces, qui utiliseront les mêmes sources de gaz, en deux dimensions ou en trois dimensions; dans ce dernier cas, la représentation des pièces est de préférence filaire, comme il est illustré sur la figure 3.

Puis, le logiciel accède aux données de base des besoins en gaz pour chaque appareil. Ces données sont stockées dans une base de données temporaire et évolutive (sur ROM). Chaque appareil peut alors être représenté par un cube.

Par une opération de type "cliquer et déplacer", sur l'écran 29 à l'aide des moyens 10, les appareils ou les cubes son placés un par un à l'endroit où ils se trouvent réellement dans les pièces ou les laboratoires.

Les conditionnements choisis, pour les différents gaz, à la pureté voulue, sont placés sur la représentation, selon les nécessités techniques.

Ensuite, les conditionnements peuvent être reliés, de manière manuelle (en introduisant des tracés de tuyaux, par exemple par déplacement d'un curseur sur l'écran 29 à l'aide de la souris 10), aux appareils nécessitant le gaz contenu dans chaque conditionnement, et en optimisant le parcours des tuyaux.

Selon une variante, c'est le logiciel lui-même qui joint les conditionnements aux appareils nécessitant le gaz contenu dans le conditionnement, suivant des critères préalablement établis (par exemple: trajet le plus court, ou suivi des murs et/ou positionnement au plafond). Les incohérences physiques peuvent éventuellement être corrigées à la main, à l'aide par exemple d'un déplacement de curseur par la souris 10; on peut aussi modifier le chemin pour des raisons de sécurité concernant l'emplacement des canalisations.

Ensuite, les différents équipements, nécessaires à la mise en oeuvre des gaz, sont ajoutés sur le schéma.

On peut donc ainsi obtenir un schéma d'installation, éventuellement coté.

Ce schéma peut être imprimé, en version globale (figure 3), ou détaillée (comme sur la figure 4) ou selon une version encore plus précise (comme sur la figure 5).

Un tel schéma peut être par exemple utilisé pour estimer les coûts de l'installation, et/ou pour servir de plan d'installation au monteur chargé de la réalisation.

Une autre étape, qui peut par exemple avoir lieu à partir de la représentation de la figure 3, est la réalisation effective de l'installation, en raccordant matériellement les sources d'alimentation 62-68, avec des canalisations 70, aux différents analyseurs 52-60.

D'une manière plus générale, les informations envoyées par le système 2 après recherche dans les bases de données 4-7, les données calculées de consommation, les données de contrainte, forment une base de données temporaire et évolutive; ou dynamique. A partir des bases de données fixes 4-7, l'utilisateur constitue une telle base de données dynamique, qui va lui permettre d'estimer un coût ou de réaliser un plan d'une installation à réaliser.

Le dispositif et le procédé selon l'invention apportent également une aide au choix, pour le cas où des mélanges de gaz doivent être choisis.

Un mélange de gaz comporte d'une part un gaz de fond, et d'autre part un ou plusieurs gaz superposés au gaz de fond. Chacun de ces gaz superposés est présent dans le gaz de fond avec une certaine concentration.

Cependant, un fabricant ou un fournisseur de mélanges de gaz ne délivre pas forcément, pour un mélange donné, toutes les concentrations possibles.

Autrement dit, les besoins d'un client ou d'un utilisateur peuvent être différents de la capacité d'un fabricant ou d'un fournisseur à produire ou à fournir des mélanges de gaz.

Par exemple, un client ou un utilisateur peut avoir besoin d'un mélange à 100 ppm, alors que le fabricant ou le fournisseur ne peut garantir qu'une concentration comprise entre 90 et 110 ppm. Il y a donc, par rapport à la concentration voulue par le client ou l'utilisateur, une tolérance due aux techniques de réalisation du mélange.

Par ailleurs, une fois qu'un mélange est réalisé, la mesure de sa concentration ne pourra être faite qu'avec une incertitude, dite incertitude d'analyse.

Si l'utilisateur a besoin de plusieurs mélanges, à diverses concentrations, par exemple pour effectuer un étalonnage d'un appareil, le résultat de l'étalonnage dépendra des incertitudes d'analyse des différents mélanges choisis.

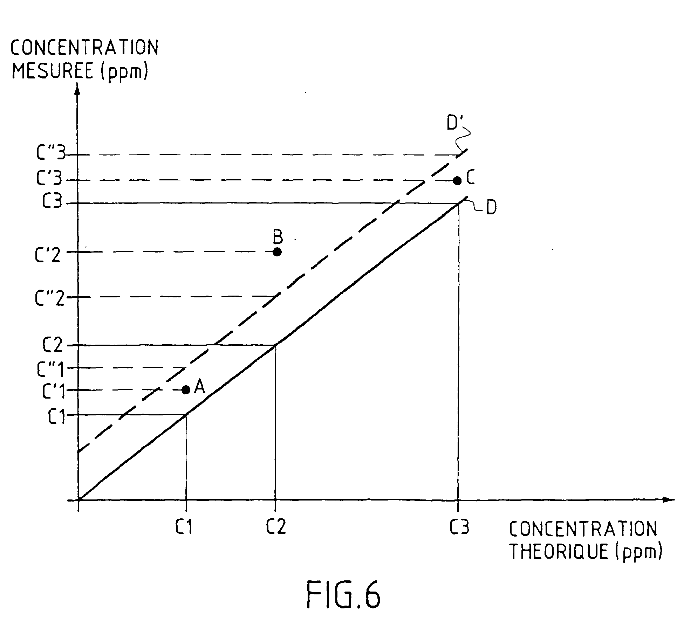

La figure 6 représente, pour un analyseur que l'on cherche à étalonner avec trois mélanges d'un gaz de fond "X" et d'un gaz "Y" et qui est disponible avec trois concentrations différentes, C₁, C₂, C₃, la droite D théorique d'étalonnage, de pente 1, ainsi que les trois points A, B, C de cordonnées respectives (C1, C'1), (C2, C'2), (C3, C'3). Les concentrations C'1, C'2, C'3 représentent, respectivement, les concentrations effectivement mesurées, et le décalage des points A, B et C par rapport à la droite théorique D est lié à l'incertitude d'analyse.

La droite D', en traits interrompus, représente la droite de régression obtenue à partir des points de mesure A, B, C. Il s'agit de la droite qui sera utilisée, de manière pratique, comme droite d'étalonnage pour l'appareil ou l'analyseur. Or, à partir des concentrations C₁, C₂, C₃, cette droite ne fournit pas les concentrations C'1, C'2, ou C'3, mais les concentrations C"1, C"2, C"3.

Autrement dit, les différences, par rapport à la droite d'étalonnage théorique D, ne sont pas uniquement dues à l'incertitude de mesure, mais également à la statistique : de manière pratique, plus les points B et C seront situés loin de la droite théorique D, et plus la droite de régression D' sera située loin du point A et de la droite D. Or, les positions des points B et C sont uniquement déterminées par l'incertitude de mesure sur C2 et C3.

Par conséquent, si l'incertitude de mesure sur B et C est réduite, la droite D' se rapproche du point A et de la droite D.

Il en résulte que le choix d'un ensemble de concentrations, en vue de réaliser un étalonnage, peut être déterminé par la représentation graphique de la droite de régression D', ou des droites de régression "maximum" et "minimum" par rapport à la droite théorique D.

L'utilisateur, qui pourra visualiser successivement les droites de régression obtenues avec différentes combinaisons de mélanges pourra faire le choix qui lui paraîtra le plus approprié à ses besoins. Après avoir visualisé une première droite de régression, qui sera selon ses critères située trop loin de la droite théorique D, il pourra choisir un autre ensemble de concentrations, et donc un autre ensemble d'incertitude d'analyse, qui permettront de ramener la droite de régression D' vers la droite D.

Selon un exemple, le tableau I ci-dessous donne, dans une première colonne, les concentrations Ci possibles. La deuxième colonne indique l'incertitude de mesure correspondante et les deux dernières colonnes les concentrations minimales et maximales, obtenues pour l'incertitude de la deuxième colonne.

**Tableau I**

| Ci (ppm) | incertitude (%) | Conc. Mini (ppm) | Conc. Maxi (ppm) |
|---|---|---|---|
| 85 | 10 | 93.5 | 76.5 |
| 250 | 7 | 267.5 | 232.5 |
| 500 | 9 | 545 | 455 |
| 750 | 6 | 795 | 705 |

Le tableau II donne, pour chaque concentration Ci les valeurs de concentration C"i minimum et maximum (respectivement première et troisième colonnes) obtenues par les droites de régression linéaire extrêmes, et les variations que ces valeurs C"i présentent par rapport à la valeur Ci

**Tableau II**

| Conc C"i Min (ppm) | Ci (ppm) | Conc C"i Max (ppm) | Variations Maxi | |
|---|---|---|---|---|
| 75.6 | 85 | 96.0 | -11% | 13% |
| 231.1 | 250 | 271.5 | -8% | 9% |
| 466.7 | 500 | 537.5 | -7% | 7% |
| 702.3 | 750 | 803.4 | -6% | 7% |

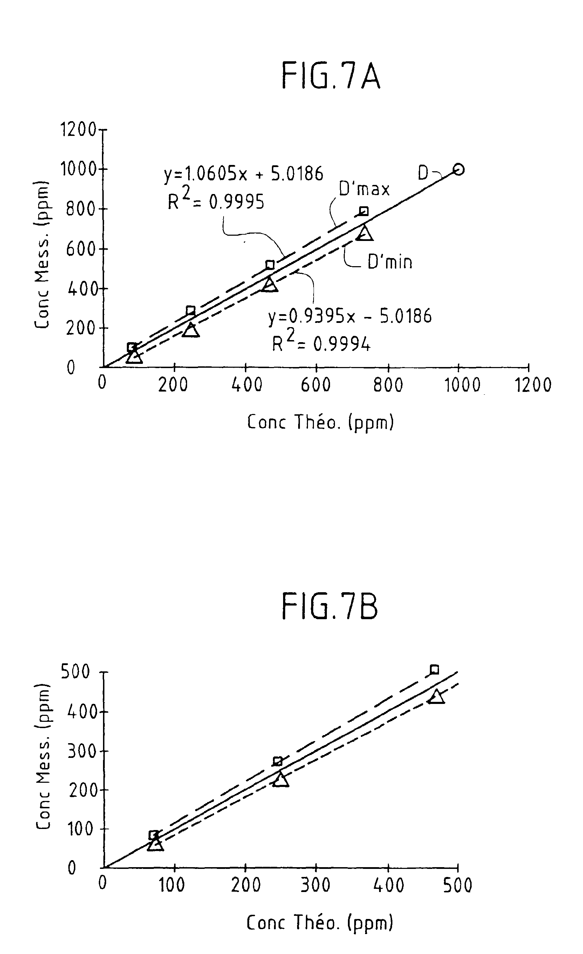

La figure 7A représente la droite théorique D et les droites de régression D'ₘᵢₙ et D'_{max,} dont les équations et coefficients de régression sont indiqués.

La figure 7B représente les mêmes droites, à une échelle différente.

L'utilisateur qui visualise les graphiques des figures 7A et 7B et pour qui le choix des 4 concentrations Ci du Tableau I ci-dessus conduit à un écart trop important des droites de régression par rapport à la droite théorique D, peut choisir un autre jeu de concentrations Ci, visualiser un autre ensemble de droites de régressions, et ainsi affiner son choix.

A cette fin, les moyens informatiques 8 ou 2 sont prévus ou spécialement programmées pour effectuer un calcul de régression pour un certain nombre de concentrations choisies par l'utilisateur, et pour afficher les droites correspondantes comme sur les figures 7A et 7B.

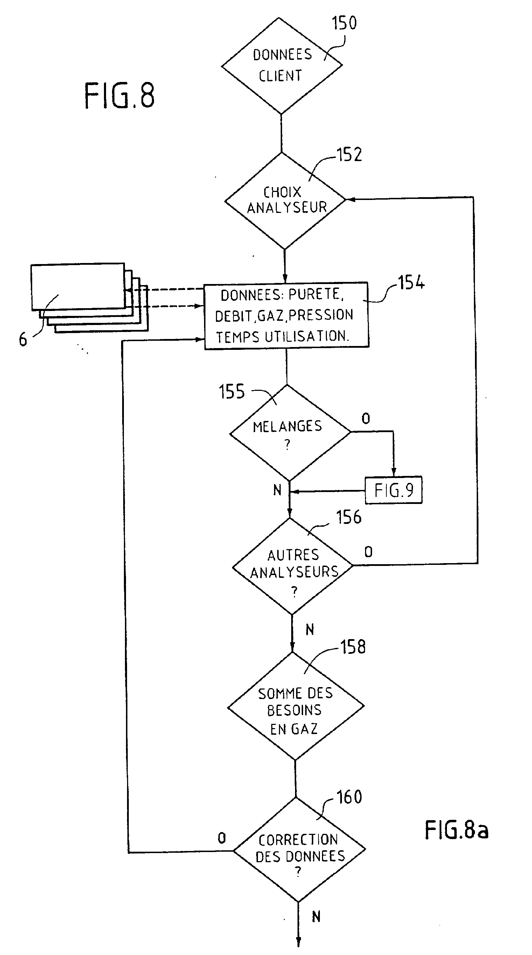

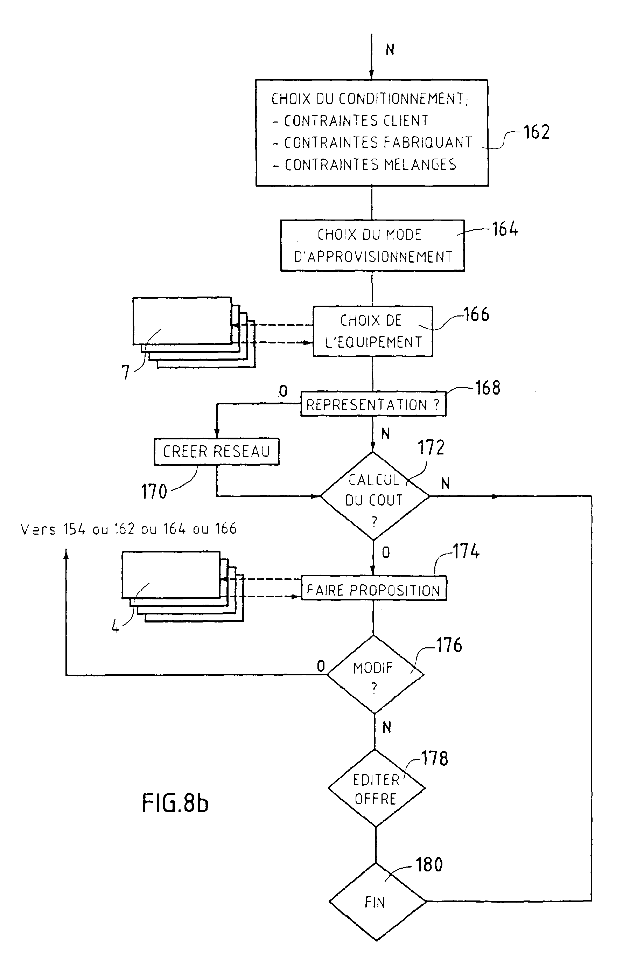

La figure 8 représente un organigramme d'un procédé selon l'invention.

Dans une première étape 150, les données sur le client sont introduites.

Puis (étape 152) le choix d'un premier analyseur est effectué. La base de données 6, qui concerne les analyseurs, est consultée et les données concernant la nature du ou des gaz d'alimentation, leur pureté, le, ou les, débit(s) et pression(s) d'alimentation nécessaires sont mémorisées dans les moyens de mémorisation du système 8 et peuvent être envoyés sur le système 2 par les moyens 12, 31. De plus, l'opérateur ou l'utilisateur peut introduire lui-même les données concernant le temps d'utilisation, à partir de quoi la consommation peut être immédiatement calculée.

Si l'utilisation prévue nécessite des mélanges de gaz (étape 155), un procédé particulier est mis en oeuvre dont l'organigramme sera décrit ci-dessous.

Si d'autres analyseurs sont compris dans l'installation de l'utilisateur, les étapes 152 et 154 sont itérées.

Une "fiche" peut alors être constituée, analyseur par analyseur, avec les besoins en gaz de chaque analyseur.

Il est ensuite procédé (étape 158) à la somme des besoins en gaz, et ceci pour chaque gaz et pour chaque grade ou pureté. Autrement dit, on considère tous les points d'utilisation d'un gaz donné, et on fait la somme des consommations en tous ces points d'utilisation.

Les données introduites peuvent ensuite être corrigées (étape 160).

Puis vient l'étape de choix du conditionnement, en fonction du fournisseur et/ou des contraintes du client (étape 162).

Les contraintes sur les mélanges concernent par exemple la méthode d'analyse ou d'étalonnage retenue, le débit, la fréquence d'utilisation, la durée de vie du mélange (durée pendant laquelle une concentration donnée peut être maintenue ou garantie). Les contraintes sur les mélanges ne sont donc pas du même type que celles portant sur les gaz purs. Les liens du système 8 avec la ou les base(s) de données 5 et/ou 6 peuvent aider à estimer les débits, les fréquences d'étalonnage, la durée de vie des mélanges, et donc à simplifier le choix.

Le mode d'approvisionnement (bouteille, cadre, générateur...) est ensuite choisi (étape 164) et l'équipement est déterminé (étape 166) par consultation de la base de données équipement 7.

L'utilisateur peut choisir une représentation graphique de l'ensemble de l'installation (étape 168), auquel cas une représentation du laboratoire ou de l'usine est créée (étape 170), avec les alimentations en gaz et les appareils ou les besoins.

L'utilisateur peut ensuite calculer (étape 172) le coût des produits devant être fournis (gaz et, éventuellement, équipement). Si non, le programme est terminé (étape 180).

Un proposition technico-commerciale peut ensuite être élaborée (étape 174). Par exemple, la base clients ou utilisateurs 4 peut être consultée pour connaître les prix pratiqués pour ce client ou cet utilisateur particulier. D'autres bases peuvent être consultées pour rassembler les informations nécessaires sur les prix pratiqués. L'utilisateur peut ensuite modifier certains paramètres (étape 176): dans ce cas, le procédé est itéré, par exemple à partir de l'une des étapes 154 ou 162 ou 164 ou 166.

Finalement, lorsque plus aucune modification n'est requise, une offre peut être éditée (étape 178), par exemple par impression sur un support papier.

Plusieurs offres peuvent être éditées: si une autre offre est demandée, pour une autre installation, le procédé recommence à l'étape 152. Par exemple, si un investissement important est nécessaire pour un nouvel approvisionnement ou un nouvel équipement, un coût annuel peut être calculé pour chaque approvisionnement ou chaque équipement, en incluant l'amortissement, et ainsi l'utilisateur peut faire la comparaison des deux offres correspondantes.

Sinon, le procédé est terminé (étape 180).

Les informations rassemblées ou obtenues peuvent être disponibles pour des commandes vers un service livraison, et/ou un service de facturation et/ou un service de montage en vue de la réalisation de l'installation.

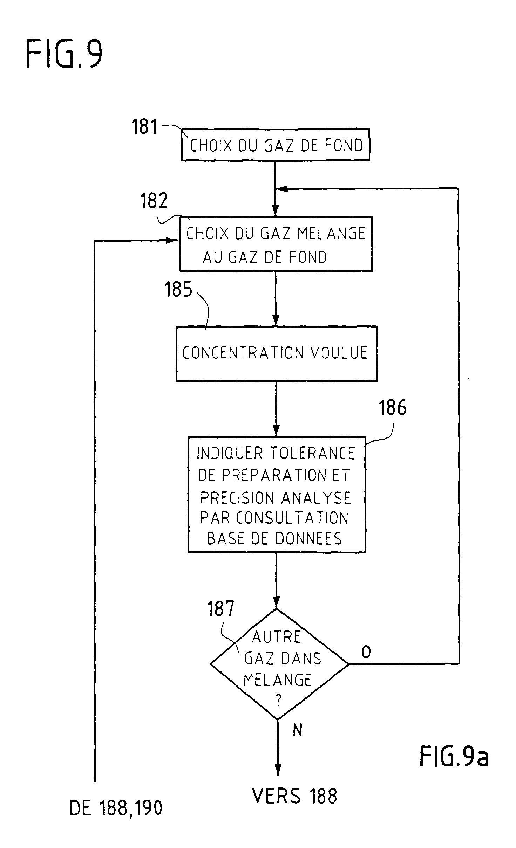

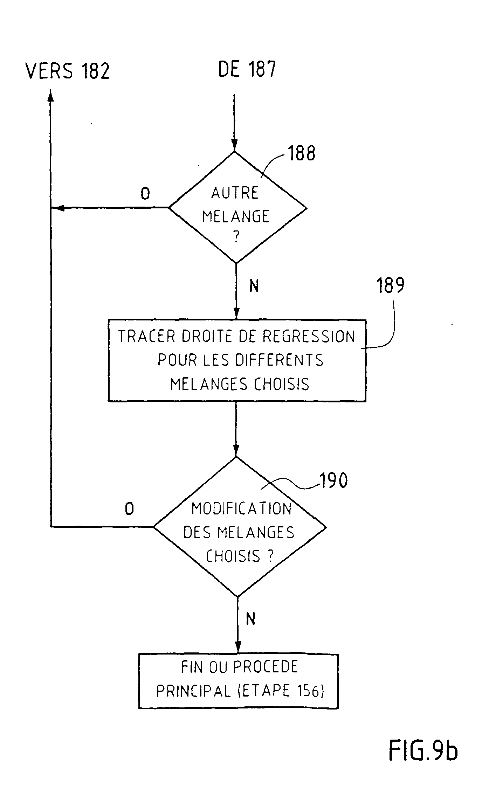

La figure 9 représente un organigramme d'un procédé selon l'invention, mis en oeuvre dans le cas où le choix d'un ensemble de mélanges, à diverses concentrations, doit être réalisé.

Dans une première étape 181, le gaz de fond des mélanges est choisi.

Puis un premier gaz, mélangé au gaz de fond, est lui aussi déterminé (étape 182).

La concentration voulue pour ce premier gaz est indiquée par l'utilisateur ou le client (étape 185).

La tolérance de préparation et la précision d'analyse pour la concentration voulue, sont indiquées ou affichées (étape 186) à partir des informations contenues dans la base de données 5. Celle-ci peut également proposer des mélanges en stock et proches de la demande du client ou compatibles avec celle-ci.

Si un étalonnage doit être réalisé avec d'autres gaz contenus dans le mélange, le client ou l'utilisateur l'indique (étape 187). Dans ce cas, les étapes 182 à 186 sont itérées autant de fois que nécessaires.

Il est ensuite procédé, éventuellement, à la détermination d'un autre mélange (étape 188).

Enfin, la droite de régression obtenue pour les différents mélanges retenus est tracée, ou affichée (étape 189), comme illustré sur la figure 7A.

Si, au vu de la position relative de la droite de régression obtenue avec les mélanges choisis (droite D' sur la figure 6) et de la droite de régression théorique D, le client ou l'utilisateur décide de modifier une ou plusieurs des concentrations, le procédé reprend l'étape 182 (étape 190).

Sinon, le procédé est terminé, ou bien, le procédé principal, dont l'organigramme a été décrit ci-dessus en liaison avec la figure 7, est repris, par exemple au niveau de l'étape 156.

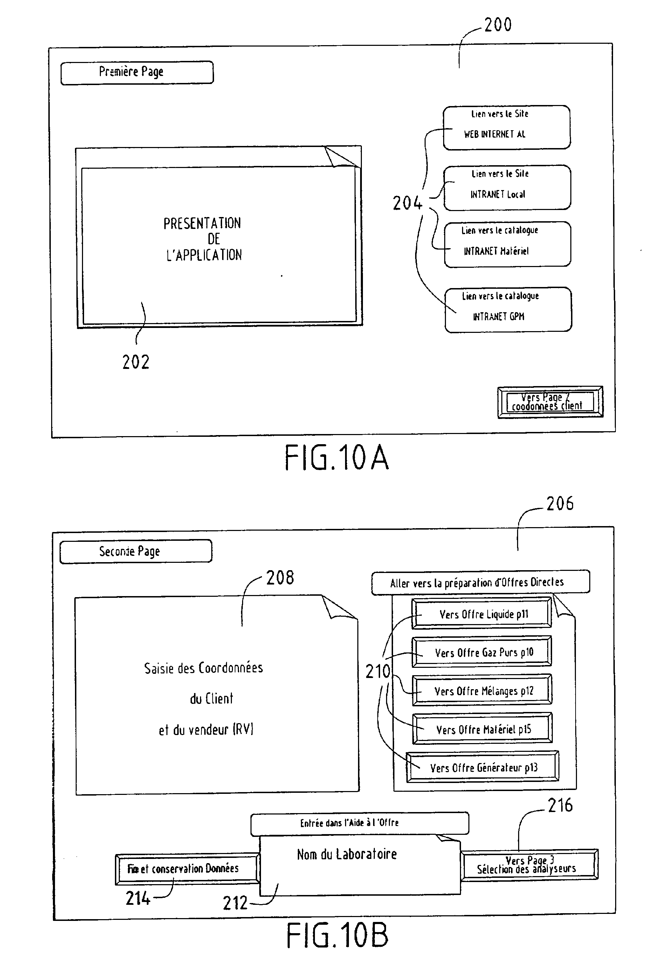

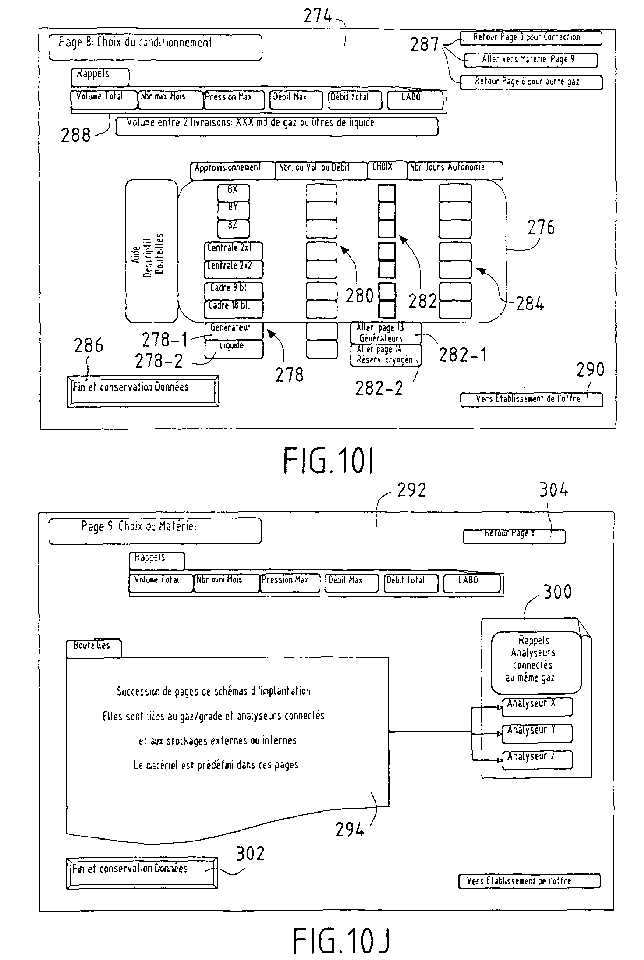

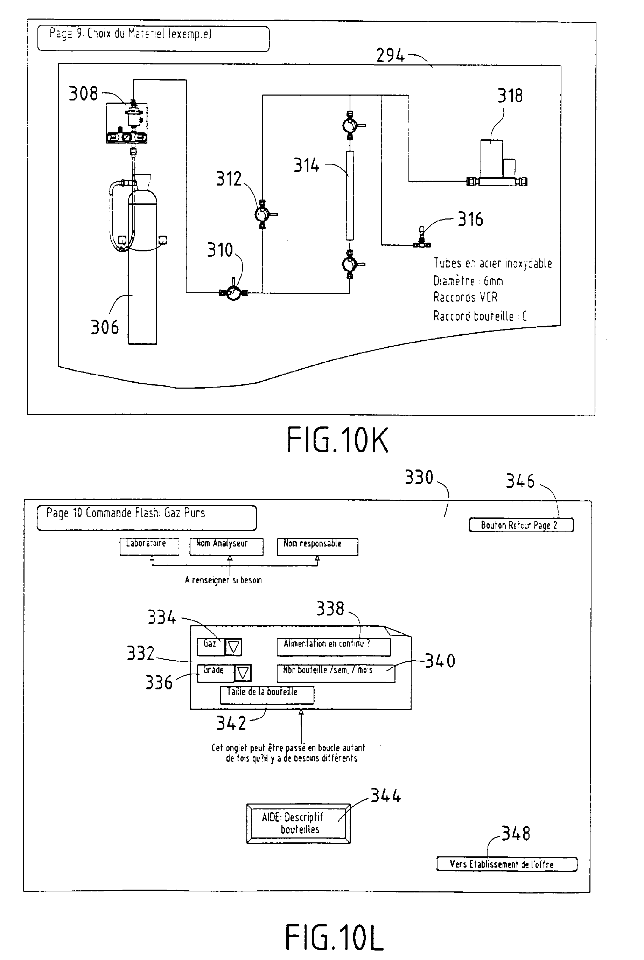

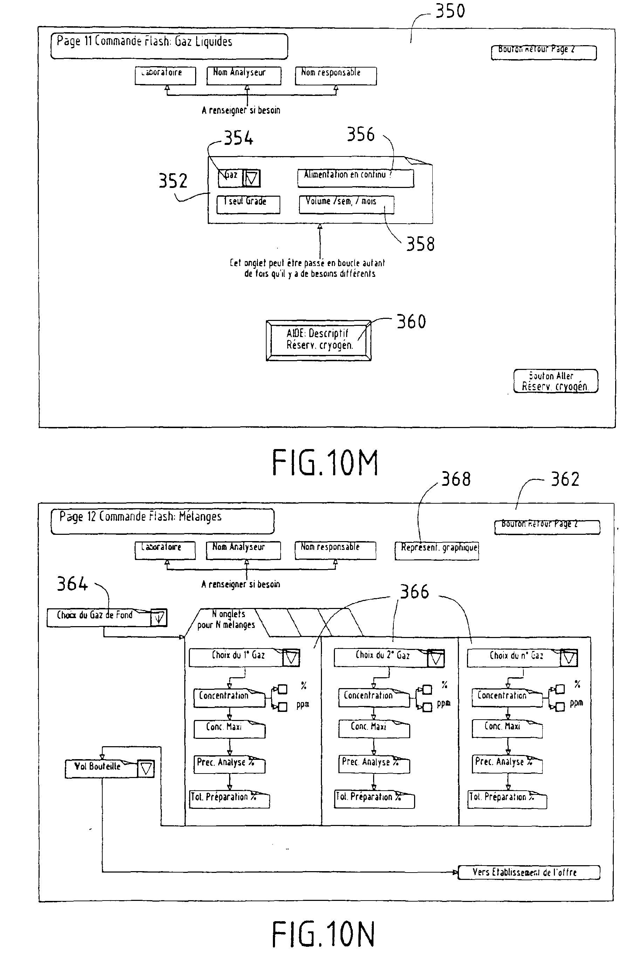

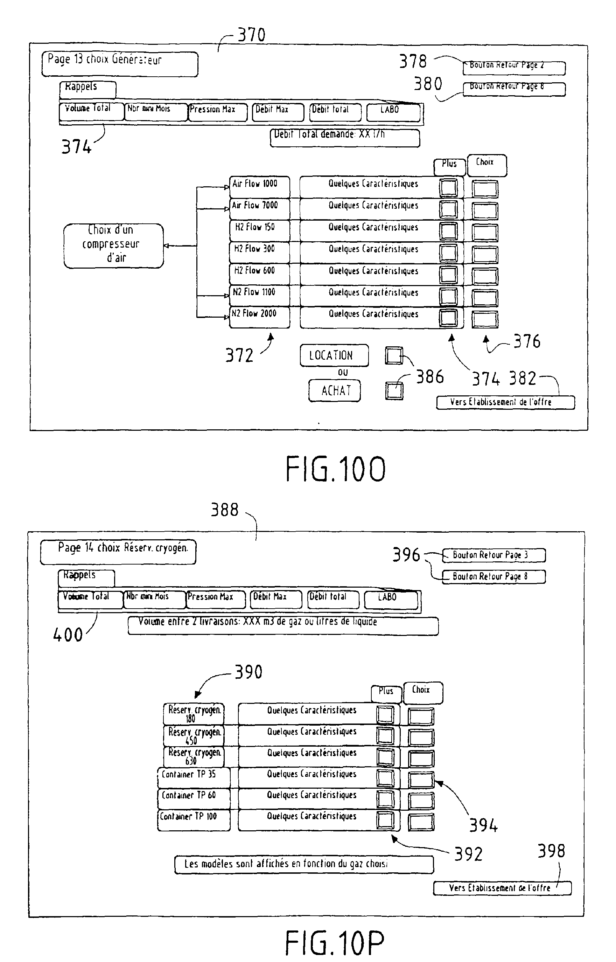

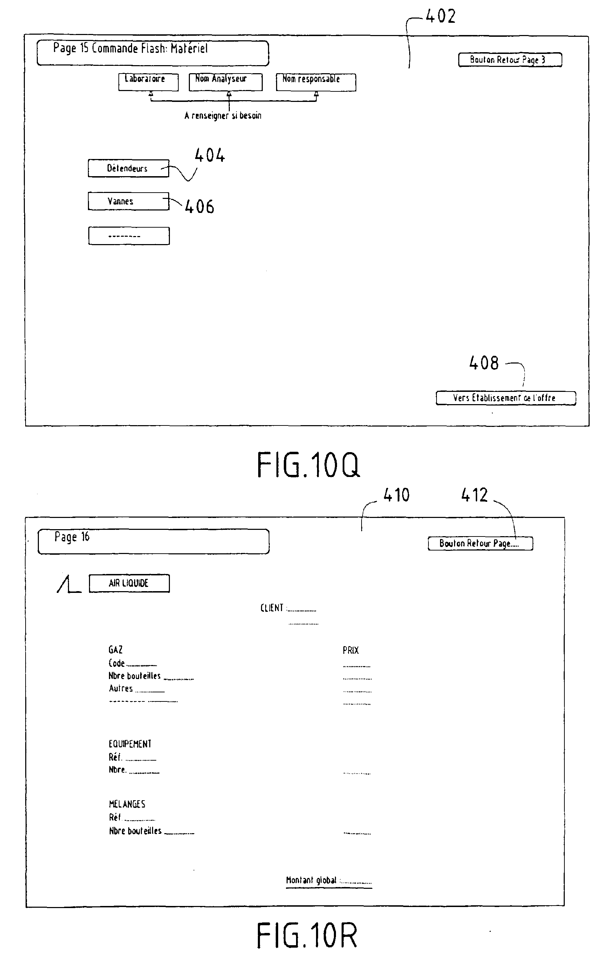

Les figures 10A à 10R représentent diverses pages écran pouvant être visualisées par un opérateur au cours de la mise en oeuvre du procédé.

Une première page d'introduction 200 (figure 10A) permet de présenter l'application avec un descriptif dans un champ 202 de cette page. Divers onglets 204 permettent de sélectionner et d'exécuter d'autres applications.

Sur la deuxième page 206 (figure 10B) un premier champ 208 offre la possibilité de saisir toute coordonnée de l'utilisateur. Il est également possible de passer, à l'aide d'onglets 210, à des pages écran qui seront décrites ci-dessous, et qui concernent essentiellement diverses possibilités d'offres directes de gaz (liquides, mélanges) ou de matériel.

L'utilisateur peut aussi introduire dans le champ 212 toute donnée concernant la dénomination du laboratoire ou de l'usine concerné ou du lieu d'utilisation des gaz.

Les choix effectués sur cette page sont validés en cliquant sur un icône 214.

Il est ensuite possible, en cliquant sur l'onglet 216, de sélectionner la page écran 218 qui concerne le choix d'un, ou de plusieurs, analyseur(s) ou d'un autre besoin ou d'une autre application.

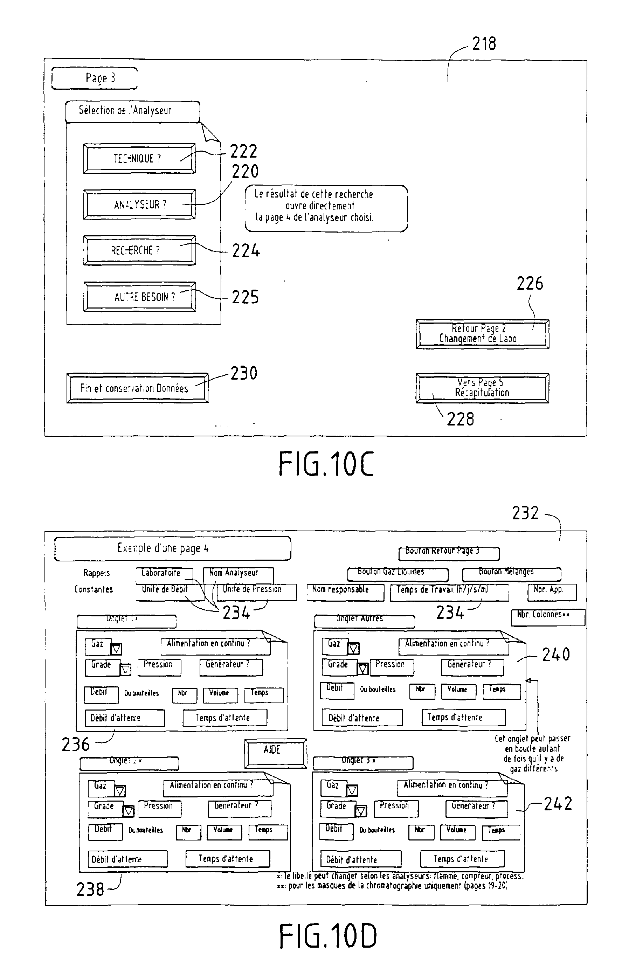

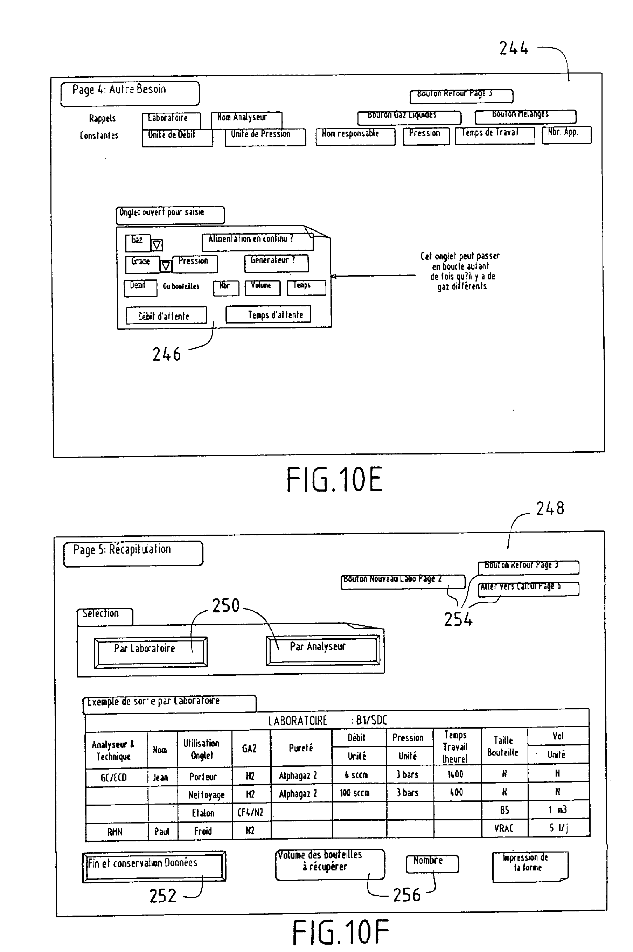

Cette dernière est représentée en figure 10C. La sélection de l'analyseur peut être faite par choix du nom de l'analyseur dans une liste déroulante (on clique dans ce cas sur l'icône 220) ou par l'introduction du nom de la technique employée (icône 222), ou par une recherche exécutée par exemple par mots clés (icône 224). Un onglet 225 permet de passer directement à la page 244 (figure 10E).

L'utilisateur peut également retourner à la page précédente (onglet 226) ou aller vers la page de récapitulation (décrite plus loin, onglet 228) ou mémoriser simplement les données déjà entrées et sélectionnées (onglet 230).

Dans ce dernier cas, la page suivante 232 (figure 10D) est directement ouverte : elle permet de rassembler, pour chaque analyseur retenu, les diverses informations le concernant. Un champ 236, 238, 240, 242 est prévu pour chaque gaz utilisé pour un analyseur donné. Par exemple, pour un analyseur qui nécessite de créer une flamme, il y aura au moins un champ 236 pour l'oxygène et un champ 238 pour l'hydrogène. Les données sur la pression et le débit de chaque gaz sont complétées automatiquement lors de la consultation de la base de données sur les analyseurs ou les appareils

Les données sur les débits d'attente, ou de maintien (débit de "stand-by" en terminologie anglo-saxonne) ou sur les temps d'attente ou de maintien (temps de "stand-by" en terminologie anglo-saxonne) sont complétées par l'utilisateur ou le client. Par défaut, ils sont mis à 0.

En haut de cette page sont rappelées, dans des champs 234 prévus à cet effet, des données relatives à l'analyseur correspondant, par exemple les unités de débit, de pression, ou de mesure du temps de travail.

Si nécessaire, une autre page 244 est affichée (figure 10E) pour d'autres besoins, avec un ou plusieurs champs 246 supplémentaires. Une telle page est notamment appelée pour un besoin non recensé en base de donnée analyseurs 6, par exemple une boîte à gants.

Une page 248 de récapitulation (figure 10F) permet de résumer l'ensemble des informations entrées sur les divers analyseurs et les gaz correspondants. L'ordre des colonnes sur le figure 10F est donné à titre indicatif et peut être modifié. Des boutons 250 de sélection permettent de choisir entre diverses présentations possibles. Ainsi la disposition présentée sur le figure 10F concerne la sélection "analyseur".

Cette page fournit une représentation tabulaire de ce qui a été saisi et permet d'avoir une vision globale des besoins unitaires.

Pour chaque analyseur, est donnée la liste des gaz nécessaires : dans l'exemple illustré, on voit immédiatement que le chromatographe à phase gazeuse identifié par GC/ECD nécessite deux alimentations d'hélium (avec des débits différents) et une alimentation en gaz étalon CF₄/N₂.

Un bouton 252 permet de valider l'ensemble des données visualisées. D'autres champs 256 peuvent contenir diverses informations (volume et nombre des bouteilles vides à récupérer). Des boutons 254 permettent de retourner à des pages précédentes ou d'aller vers des pages suivantes.

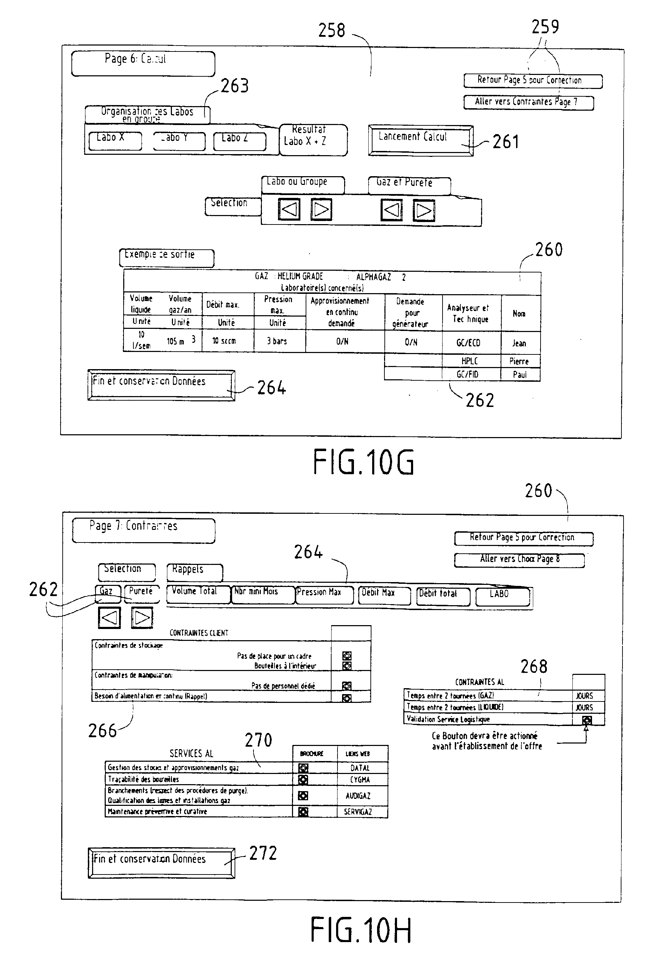

La page 258 (figure 10G) permet de faire exécuter les calculs de consommation, par laboratoire ou salle, pour chacun des gaz. Cliquer sur un onglet 261 permet de démarrer le calcul pour un gaz donné. Un tableau 260 rassemble les diverses données pour un gaz donné. En particulier une colonne 262 du tableau peut rassembler la liste des analyseurs pour lesquels le gaz choisi, avec une pureté donnée, va être utilisé. Les boutons 263 ("Organisation des labos") permettent de rassembler les salles ou les laboratoires en conglomérats dépendant du même approvisionnement.

Un onglet 264 permet de valider les calculs et de les mémoriser, tandis qu'un d'autres onglets 259 permettent de retourner à la page précédente pour correction ou d'aller vers la page suivante.

Une page 260 (figure 10H) permet de rassembler les données portant sur les contraintes du fabricant et/ou du client ou de l'utilisateur, ces données étant notamment utilisées pour la détermination du choix de l'approvisionnement.

En haut de l'écran, des boutons 262 permettent de sélectionner le gaz et la pureté voulus. Un champ 264 rassemble et affiche des données pour chaque couple (gaz, grade) sélectionné avec les boutons 262.

Les contraintes du client sont rassemblées dans un champ 266. Ces contraintes portent notamment sur le stockage (par exemple : de la place est elle disponible pour installer un cadre; les bouteilles doivent-elles être stockées en intérieur...), et/ou la manipulation (existe-t-il chez le client du personnel pouvant manipuler des bouteilles?), et/ou le besoin d'alimentation en continu,...

Les contraintes du fabricant ou du fournisseur sont rassemblées dans un champ 268. Ces contraintes portent notamment sur les intervalles de temps entre deux tournées successives de livraison de gaz liquide ou gazeux.

D'autres contraintes sont rassemblées dans un troisième champ 270 et concernent les services pouvant être fournis par le fabricant ou le fournisseur.

Un onglet 272 permet de valider et de mémoriser les données introduites sur les contraintes.

Une page 274 (figure 101) permet de procéder au choix du conditionnement. En fonction des données précédemment rentrées, le logiciel propose, pour chaque gaz, un conditionnement possible. Dans le tableau 276, la colonne 278 indique le conditionnement, la colonne 280 le nombre de bouteilles nécessaires (ou le volume ou le débit nécessaire, pour du gaz en vrac).

L'utilisateur peut choisir de retenir certains conditionnements proposés, ou pas, en cochant une case correspondante dans la colonne 282. La colonne suivante 284 indique par exemple le nombre de jours d'autonomie pour le choix retenu.

Deux cases 278-1 et 278-2 sont prévues en bas de la colonne 278 pour le cas de l'offre d'un générateur ou de gaz liquide. Si le client valide l'une de ces deux offres en cliquant sur l'une des cases 282-1 et 282-2, l'une ou l'autre des pages dédiées aux générateurs et aux réservoirs cryogéniques ("rangers" en terminologie anglo-saxonne, conteneurs pour les gaz liquides) est affichée à l'écran. Ces pages seront décrites ci-dessous.

Un onglet 286 permet de valider les choix retenus et de les mémoriser, tandis que d'autres onglets 287 permettent de retourner aux deux pages précédentes pour correction ou pour sélectionner d'autres gaz, ou d'aller vers la page suivante 292.

En haut de cette page 274 sont rappelées, dans un champ 288, des données relatives à un gaz donné. Le volume entre deux livraisons rappelle le volume que le client consomme entre deux livraisons (à ce stade, le rapport consommation totale/temps entre deux tournées a déjà été calculé).

Il est également possible d'aller directement vers la page "établissement de l'offre" (décrite plus loin) en cliquant sur un onglet 290 : en effet, à ce stade, toutes les données sont disponibles pour effectuer une première offre technico- commerciale. Mais cette offre ne couvre pas encore le matériel à mettre en oeuvre pour réaliser l'installation.

La page suivante 292 rassemble les données sur le choix du matériel ou de l'équipement.

Cette page présente essentiellement un champ 294 correspondant respectivement au conditionnement choisi pour un gaz et une pureté donnés, avec le matériel obtenu en rassemblant diverses données à partir de la base de données 7. Cette page représente un assemblage de ces différents éléments de manière à assurer la distribution voulue en conservant la pureté jusqu'au point d'utilisation.

Un exemple de ce qui peut être affiché sur ce champ 294 est donné en figure 10K. La référence 306 désigne une bouteille de gaz cylindrique, à laquelle est relié un ensemble 308 détendeur-vanne, en amont d'un détendeur basse-pression 310. On trouve ensuite, en parallèle, une vanne basse-pression 312 et un purificateur 314 reliés soit à une vanne de réglage 316 soit à un débitmètre massique 318.

Comme illustré sur la figure, peuvent également être affichées dans le champ 294 des informations sur les tubes de raccordement et/ou sur les raccords des conditionnements et/ou des appareils à ces tubes. D'autres exemples de représentation pouvant être affichées sont celles des figures 3, 4 ou 5, plus ou moins détaillées. Plusieurs de ces représentations peuvent être affichées sur la page 292, en superposition, l'opérateur choisissant, par exemple en cliquant sur un point d'une des représentations, celle de ces représentations qu'il veut visualiser complètement.

Ce champ 294 peut apparaître simultanément avec un tableau 300 de rappel sur l'ensemble des analyseurs qui sont connectés à un même gaz.

En haut de la page 292, des données sont rappelées pour un gaz donné.

Un onglet 302 permet de valider et de mémoriser les données affichées.

Un onglet 304 permet de retourner à la page précédente, et un onglet 306 permet d'aller directement vers la page "établissement de l'offre" (décrite plus loin): à ce stade toutes les données sont disponibles pour effectuer une offre technico-commerciale incluant du matériel.

Diverses indications techniques peuvent être portées sur le schéma, comme illustré sur la figure 10K.

Les pages 330 et 350 (figures 10L et 10M) ne se situent pas dans la suite logique des pages précédentes, mais apparaissent plutôt à la suite de la page 206 lorsque l'offre "gaz pur" ou "liquide" a été choisie à l'aide des icônes 210 (voir figure 10D). Ces pages 330 et 350 sont en quelque sorte des bons de commande qui permettent de répondre à des demandes simples. Si un client ou un utilisateur souhaite directement commander des gaz purs, ou liquides, l'une ou l'autre de ces pages est remplie.

Par exemple, pour la page 330, on indiquera dans un champ 332, à l'aide d'onglets 334 et 336, la nature et la pureté du gaz voulu. On pourra également indiquer si l'alimentation est effectuée en continu (onglet 338) ou si un souhaite commander un certain nombre de bouteilles, avec éventuellement la périodicité correspondante (onglet 340). La taille de la bouteille est également à indiquer (onglet 342).

Le champ 332 peut être successivement rempli pour différents gaz et différentes commandes.

Eventuellement, un onglet 344 permet de faire appel à un descriptif des diverses bouteilles que le fabricant ou le fournisseur peut proposer. Ce descriptif est stocké dans la mémoire du système informatique 8 et/ou envoyé vers le système 2.

Des informations accessoires peuvent également être introduites en haut de cette page 330, sur le nom du laboratoire et/ou de l'analyseur pour lequel la commande est réalisée, et éventuellement de la personne responsable de la commande.

Un onglet 346 permet de retourner vers la page 206 (figure 10B). Un onglet 348 permet d'aller directement vers l'établissement de l'offre.

Les données à entrer sur la page 350, dans un champ 352, concernent la nature du gaz (onglet 354), et les modes d'alimentation (en continu, ou non, onglet 356). Les besoins en volume, avec éventuellement la périodicité de ces besoins, peuvent être indiqués dans l'onglet 358. Le champ 352 peut être rempli autant de fois qu'il y a de besoins différents en gaz liquide.

Si nécessaire, un descriptif des gaz liquides disponibles, et de leur conditionnement ("rangers", ou réservoirs cryogéniques) peut être affiché par appel à l'aide d'un onglet 360. Un tel descriptif est contenu en mémoire du système 8.

Les autres onglets (informations éventuelles, bouton de retours vers la page 206, et bouton vers l'établissement de l'offre) sont identiques à ceux de la page précédente).

La page 362 (figure 10N) concerne le cas d'une commande de mélange.

Un premier onglet 364 permet de sélectionner le gaz de fond. Puis, pour les différents gaz mélangés avec le gaz de fond, des sous-tableaux 366 sont remplis.

Chaque sous-tableau comporte le choix de gaz, le choix de sa concentration (en % ou en ppm), l'indication de la concentration maximale souhaitée, ainsi que la précision d'analyse et la tolérance de préparation (données provenant par exemple de la base de données gaz 5) qu'il est possible d'obtenir avec la concentration voulue (voir explications données ci-dessus, en liaison avec la figure 6, au sujet de la tolérance de préparation et de l'incertitude d'analyse).

Si plusieurs concentrations d'un même mélange sont choisies en vue de réaliser un étalonnage, un onglet 368 de représentation graphique peut être cliqué, afin de faire apparaître une représentation telle que celle de la figure 6 ou des figures 7A et 7B, où l'on voit d'une part la droite d'étalonnage théorique et d'autre part la droite d'étalonnage obtenue par régression, avec les mélanges et concentrations choisis.

L'écran affichera alors une page qui contient d'une part la droite d'étalonnage (comme celle des figures 6 ou 7A) et d'autre part un onglet qui offre la possibilité de retourner à la page précédente 362 et d'y modifier les diverses concentrations choisies.

La page 370 (figure 10O) permet, dans le cas du choix d'un générateur, de présenter diverses caractéristiques de divers générateurs. Cette page se situe dans la suite de la page 206, après qu'un opérateur ait cliqué sur l'icône "vers offre générateur" 210.

Sur cette page 370, diverses références 372 de générateurs sont présentées, avec la possibilité d'obtenir, sur chacun de ces générateurs, des informations en cliquant sur un onglet 374. Le choix de tel ou tel générateur peut être validé en cochant ou en cliquant un onglet 376.

Cette page comporte un outre un bouton 378 de retour à la page écran 206, un bouton 380 de retour à la page écran 274 et un bouton 382 qui permet d'aller directement à l'établissement de l'offre.

Des données générales peuvent être rappelées en haut de l'écran 370, dans un champ 384.

Enfin, un client ou un utilisateur éventuel peut indiquer son souhait de louer ou d'acheter le compresseur ou l'appareil en question à l'aide de boutons 386.

La page écran 388 (figure 10P) est une page de sélection de réservoir cryogénique, c'est-à-dire de conditionnement d'un gaz liquide donné. Les différents conditionnements disponibles sont indiqués dans une première colonne 390. Un utilisateur qui souhaite avoir de plus amples informations sur l'un ou l'autre des conditionnements proposés peut cliquer le bouton correspondant dans une colonne 392. Pour sélectionner l'achat d'un conditionnement particulier, il suffit de cliquer le bouton correspondant dans la colonne 394.

Cette page 388 présente par ailleurs les mêmes types de boutons de retour 396, de choix de l'établissement de l'offre 398, et le même type de champ de rappel 400 que la page écran 370 décrite précédemment.

La figure 10Q représente une page 402 qui apparaît après sélection, sur l'écran 206, du bouton 210 "offre matériel" (offres directes). Il s'agit là encore de "bons de commande" pour répondre au besoin d'un client ou d'un utilisateur qui souhaite commander directement du matériel. Sur cette page 402, l'utilisateur peut sélectionner diverses rubriques, ou têtes de chapitre, en cliquant sur les onglets correspondants 404, 406, ... . Pour chaque sélection apparaît ensuite une page de descriptif des divers appareils de chaque rubrique et de commande, similaire à la page 370 (figure 10O). Il est ensuite possible de retourner vers la page 206 (figure 10B), ou d'aller directement à l'établissement de l'offre (bouton 408).

L'offre est établie sur la page 410 (figure 10R) qui va réunir l'ensemble des données sur les gaz, les mélanges et les matériels commandés. Un bouton 412 offre la possibilité de retourner vers une des pages précédentes, par exemple la page 206 (figure 10B). Ceci permet d'établir une nouvelle offre immédiatement après la première et d'effectuer une comparaison entre les deux offres.

Le procédé selon l'invention met en oeuvre des programmes, à la fois du côté du serveur ou système 2 et du côté utilisateur. Du côté serveur, le langage VB Script est utilisé pour la programmation (génération de code HTML). Java Script est utilisé pour la programmation côté client. Les requêtes sont formulées en SQL.

Les instructions des programmes pour mettre en oeuvre un procédé selon l'invention sont mémorisées dans une zone mémoire du système informatique 8 ou du système 2. Ces instructions sont par exemple installées à partir d'un support pouvant être lu par le système informatique 8 et sur lequel elles sont enregistrées. Un tel support peut être par exemple un disque dur, une mémoire morte ROM, un disque optique compact, une mémoire vive dynamique DRAM ou tout autre type de mémoire RAM, un élément de stockage magnétique ou optique, des registres ou d'autres mémoires volatiles et/ou non volatiles.

## Revendications

1. Procédé pour établir un schéma d'une installation mettant en oeuvre des appareils, chaque appareil étant alimenté avec du gaz, comportant:
- la consultation d'une ou plusieurs base(s) de données (6) comportant, pour chaque appareil, des données sur le débit, la nature, la pureté du gaz alimentant l'appareil, et la pression d'alimentation de ce gaz pour cet appareil,
- la sélection, pour chaque appareil, d'une valeur, ou d'une valeur limite, de durée ou de fréquence d'utilisation ,
- le calcul, pour chaque appareil, de la consommation, ou de la consommation limite, en fonction de la valeur d'utilisation et des données sur le débit,
- le calcul, pour chaque gaz et chaque pureté de gaz, de la somme des consommations de tous les appareils,
- la consultation d'une base de données (5) pour proposer, pour chaque gaz et chaque pureté de gaz, un conditionnement, en fonction des consommations et de contraintes techniques relatives au stockage des gaz et/ou à leur livraison.

2. Procédé pour établir un ensemble de données pour la constitution d'une installation mettant en oeuvre des appareils, chaque appareil étant alimenté avec du gaz, comportant l'élaboration d'une base de données contenant:
- pour chaque appareil, les données sur la nature et la pureté des gaz pour cet appareil, ainsi que le débit, la pression d'alimentation et la consommation de chaque gaz pour cet appareil,
- la somme des consommations de tous les appareils, pour chaque gaz et chaque pureté de gaz,
- une donnée relative à un conditionnement, pour chaque gaz et chaque pureté de gaz, en fonction des consommations des appareils.

3. Procédé selon la revendication 2, l'élaboration de la base de données comportant les étapes suivantes:
- la consultation d'une ou plusieurs base(s) de données (6) comportant, pour chaque appareil, des données sur le débit, la nature, la pureté du gaz alimentant l'appareil, et la pression d'alimentation de ce gaz pour cet appareil,
- la sélection, pour chaque appareil, d'une valeur, ou d'une valeur limite, de durée ou de fréquence d'utilisation ,
- le calcul, pour chaque appareil, de la consommation, ou de la consommation limite, en fonction de la valeur d'utilisation et des données sur le débit,

4. Procédé selon la revendication 2 ou 3, l'élaboration de la base de données comportant en outre la consultation d'une base de données (5) pour proposer, pour chaque gaz et chaque pureté de gaz, un conditionnement, en fonction de la consommation.

5. Procédé selon la revendication 4, le conditionnement, pour chaque gaz et chaque pureté de gaz étant également fonction de contraintes techniques relatives au stockage des gaz et/ou à leur livraison.

6. Procédé selon l'une des revendications 1 à 5, comportant en outre :
- une étape de consultation d'une base de données (7), comportant des données sur des équipements d'installations de gaz,
- la recherche, dans cette base, de l'équipement (90-100, 104, 106, 108) permettant, pour chaque conditionnement et chaque appareil, de relier ledit conditionnement au dit appareil (105, 107, 109).

7. Procédé selon la revendication 6, la consultation de la base de données (7), comportant des données sur des équipements d'installations de gaz, et la recherche, dans cette base, de l'équipement nécessaire (90-100, 104, 106, 108) comportant:
- une première étape de consultation et de recherche pour la partie haute pression, associée à chaque conditionnement de gaz,
- une deuxième étape de consultation et de recherche pour la partie basse pression, associée à chaque appareil alimenté avec ce gaz.

8. Procédé selon la revendication 7, la première et la deuxième étapes de consultation et de recherche comportant en outre un affichage ou une visualisation qui montre:
- dans la première étape : le stockage ou le conditionnement du gaz, et le matériel nécessaire au fonctionnement de ce stockage ou de ce conditionnement,
- dans la deuxième étape : les raccordements à effectuer entre la sortie du stockage ou du conditionnement du gaz et l'appareil alimenté avec ce gaz.

9. Procédé pour établir un schéma d'une installation mettant en oeuvre des appareils, chaque appareil étant alimenté avec du gaz, comportant:
- l'établissement d'un ensemble de données selon l'une des revendications 2 à 5,
- la réalisation d'un schéma ou d'une représentation graphique de l'installation, en fonction des données contenues dans cet ensemble de données.

10. Procédé selon l'une des revendication 1 à 8, comportant en outre une étape de représentation graphique de l'installation comportant lesdits appareils (52, 54, 56, 58, 60; 72, 74, 76, 78, 80, 82, 105, 107, 109) et les sources de gaz (62, 64, 66, 96, 306) auxquelles ils sont reliés.

11. Procédé selon la revendication 9 ou 10, la représentation graphique étant précédée d'une étape de sélection d'une représentation graphique, ou d'un type de représentation graphique, parmi plusieurs représentations graphiques, ou plusieurs types de représentation, possibles.

12. Procédé selon l'une des revendications 9 à 11, le schéma ou la représentation graphique, ou une des représentations graphiques, étant tridimensionnel et comportant une représentation des canalisations (70) reliant lesdits appareils aux sources de gaz.

13. Procédé selon l'une des revendications 9 à 12, le schéma ou la représentation graphique, ou une des représentations graphiques, représentant lesdits appareils (105, 107, 109), les sources de gaz auxquelles ils sont reliés (90, 96) et les équipements (98, 100, 102, 104, 106, 108, 308-318) pour relier lesdits appareils aux dites sources de gaz.

14. Procédé selon l'une des revendications 1 à 13, comportant, lorsque l'un des gaz est un mélange d'un gaz de fond et d'au moins un premier gaz mélangé:
- la sélection de la composition quantitative souhaitée de gaz mélangé dans le mélange,
- la consultation d'une base de données (5) comportant, pour chaque mélange, les tolérances de préparation et les incertitudes d'analyse correspondantes,
- l'indication, pour la composition quantitative souhaitée, de la tolérance de préparation et de l'incertitude d'analyse.

15. Procédé selon la revendication 14, comportant en outre, lorsque plusieurs compositions quantitatives sont sélectionnées pour un même mélange:
- un calcul de régression linéaire à partir des précisions d'analyse pour les différents mélanges et les différentes compositions quantitatives,
- l'affichage d'une droite de régression (D') correspondant à ce calcul de régression linéaire, pour un appareil donné.

16. Procédé selon l'une des revendications précédentes, la base de données (6) consultée, ou la base de données élaborée, comportant en outre, pour au moins un des appareils, une donnée sur la nature d'un mélange avec lequel cet appareil peut être étalonné, et une donnée sur la fréquence d'étalonnage dudit appareil.

17. Procédé selon l'une des revendications 1 à 16, dans lequel, en outre, on affiche, sur une même page (232) d'un écran d'un moyen de visualisation, et pour un même appareil, les données correspondantes (236, 238, 240, 242) sur les gaz à utiliser avec cet appareil.

18. Procédé selon l'une des revendications 1 à 17, dans lequel, en outre, on affiche, sur une même page (258) d'un écran d'un moyen de visualisation, et pour un même gaz, la somme des consommations pour ce gaz et l'ensemble des appareils alimentés par ce gaz.

19. Procédé pour réaliser une installation mettant en oeuvre des appareils, chaque appareil étant alimenté avec du gaz, comportant :
- l'établissement d'un schéma ou d'une représentation graphique de l'installation, par un procédé selon la revendication 1, ou selon l'une des revendications 9 à 13
- la réalisation de l'installation.

20. Dispositif pour établir un schéma d'une installation mettant en oeuvre des appareils, chaque appareil étant alimenté avec des gaz, ce dispositif comportant :
- des moyens (2) mémorisant :
- au moins une base de données (6) comportant, pour chaque appareil, des données sur le débit, la nature, la pureté du gaz alimentant l'appareil, et la pression d'alimentation de ce gaz pour cet appareil,
- une base de données (5) comportant, pour chaque gaz et chaque pureté de gaz, au moins un conditionnement possible,
- des moyens (30) pour sélectionner, pour chaque appareil, une valeur, ou une valeur limite, de durée ou de fréquence d'utilisation ,
- des moyens (22, 24) pour calculer, ou spécialement programmés pour calculer, pour chaque appareil, la consommation, ou la consommation limite, en fonction des données sur le débit et de la valeur d'utilisation,
- des moyens (22, 24) pour calculer, ou spécialement programmés pour calculer, pour chaque gaz, et chaque pureté de gaz, la somme des consommations de tous les appareils,
- des moyens (12, 14, 16, 31) pour consulter la base de données (5) sur les conditionnements, et pour y trouver, en fonction de données de consommation en gaz et de contraintes techniques relatives au stockage des gaz et/ou à leur livraison, un conditionnement possible.

21. Dispositif terminal (8) pour établir un schéma d'une installation de gaz, pour un laboratoire ou une usine comportant au moins un appareil, chaque appareil étant alimenté avec des gaz, ce dispositif comportant :
- des moyens de communication (12, 14, 16, 31) pour établir une communication entre ledit dispositif terminal et des moyens (2) contenant au moins une base de données (4, 5, 6, 7) comportant, pour chaque appareil, des données sur le débit, la nature, la pureté du gaz alimentant l'appareil, et la pression d'alimentation de ce gaz pour cet appareil, et pour transférer des données depuis ledit ensemble de bases de données vers ledit terminal,
- des moyens (30) pour fournir audit terminal des données d'utilisateur dudit terminal, comportant au moins une donnée sur un appareil utilisé ou identifiant un appareil utilisé,
- des moyens de mémorisation (24, 26), en communication avec les moyens pour fournir audit terminal des données d'utilisateur, pour mémoriser ces données d'utilisateur sur un appareil utilisé par l'utilisateur, ainsi que des données fournies par la base de données sur le débit, la nature, la pureté du gaz alimentant cet appareil, et la pression d'alimentation de ce gaz pour cet appareil,
- des moyens (22, 24) pour calculer, ou spécialement programmés pour calculer, pour chaque appareil, la consommation, ou la consommation limite, en fonction du débit de gaz, et pour calculer, pour chaque gaz, et chaque pureté de gaz, la somme des consommations de tous les appareils utilisés,
- des moyens d'affichage (29), en communication avec les moyens de mémorisation, pour afficher au moins une partie de ces données fournies par la base de données, et/ou la ou les somme(s) de consommation calculée(s) pour chaque gaz.

22. Dispositif selon l'une des revendications 20 ou 21, comportant en outre des moyens (22, 29) pour représenter graphiquement l'installation comportant lesdits appareils et leurs moyens d'alimentation en gaz.

23. Dispositif selon la revendication 22, les moyens de représentation graphique étant des moyens de représentation tridimensionnelle.

24. Dispositif selon l'une des revendications 19 à 23, comportant en outre, pour le cas où l'un des gaz est un mélange d'un gaz de fond et d'au moins un premier gaz mélangé:
- des moyens (30, 10) pour sélectionner la composition quantitative souhaitée de gaz mélangé dans le mélange,
- des moyens (22, 12, 31) pour, ou spécialement programmés pour, établir une communication entre ledit dispositif et une base de données (5) comportant, pour chaque mélange, les tolérances de préparation et les précisions d'analyse correspondantes, et pour rechercher dans cette base la tolérance de préparation et la précision d'analyse correspondantes à la composition quantitative souhaitée,
- des moyens (29) pour afficher, pour la composition quantitative souhaitée, la tolérance de préparation et la précision d'analyse.

25. Dispositif selon la revendication 24, comportant en outre, pour le cas où plusieurs compositions quantitatives sont sélectionnées pour un même mélange:
- des moyens (22) pour effectuer un calcul de régression linéaire à partir des précisions d'analyse pour les différents mélanges et les différentes compositions quantitatives,
- des moyens (29) pour afficher une droite de régression (D') correspondant à ce calcul de régression linéaire, pour un appareil donné.

26. Dispositif selon l'une des revendications 20 à 25, la base de données (6) comportant, pour chaque appareil, des données sur le gaz alimentant cet appareil, comportant également, pour au moins un des appareils, une donnée sur la nature du gaz avec lequel cet appareil peut être étalonné, et une donnée sur la fréquence d'étalonnage de cet appareil avec ce gaz.

27. Dispositif selon l'une des revendications 20 à 26, comportant en outre des moyens pour, ou spécialement programmés pour, afficher, sur une même page (232) d'un écran d'un moyen de visualisation (29), et pour un même appareil, les données correspondantes (236, 238, 240, 242) sur les gaz à utiliser avec cet appareil.

28. Dispositif selon l'une des revendications 20 à 27, comportant en outre des moyens pour, ou spécialement programmés pour, afficher, sur une même page (258) d'un écran d'un moyen de visualisation (29), et pour un même gaz, la somme des consommations pour ce gaz et l'ensemble des appareils alimentés par ce gaz.

29. Dispositif selon l'une des revendications 20 à 28, les moyens de mémorisation, ou contenant, des bases de données étant localisés dans un ordinateur central (2).

30. Programme d'ordinateur comportant les instructions pour mettre en oeuvre un procédé selon l'une des revendications 1 à 18.

31. Support de données, pouvant être lu par un système informatique, comportant les données, sous forme codée, pour mettre en oeuvre un procédé selon l'une des revendications 1 à 18.

32. Produit logiciel comportant un moyen de support de données de programme, susceptible d'être lu par un système informatique, permettant de mettre en oeuvre un procédé selon l'une des revendications 1 à 18.
